# EUROPEAN PATENT SPECIFICATION

(11) **EP 1 703 375 B1**
(45) Date of publication and mention of the grant of the patent: **26.08.2015**
(21) Application number: 06005552.2
(22) Date of filing: 17.03.2006
(51) Int. Cl.: G06F 9/38

(54) **Real-time control apparatus having a multi-thread processor**
Echtzeitsteuerung mit Multi-Thread-Prozessor
Appareil de contrôle en temps réel doté d'un processeur à fils multiples

(30) Priority: 18.03.2005 US 84386; 18.03.2005 US 84364
(43) Date of publication of application: 20.09.2006
(73) Proprietor: Marvell World Trade Ltd., Brittons Hills BB 14027 Saint Michael (BB)
(72) Inventor: Sehat, Sutardja, Los Altos, CA 94022 (US)
(74) Representative: Grünecker Patent- und Rechtsanwälte PartG mbB

(56) References cited:
- WO-A-99/21082
- WO-A-03/088036
- HASKINS J W ET AL INSTITUTE OF ELECTRICAL AND ELECTRONICS ENGINEERS: "INEXPENSIVE THROUGHPUT ENHANCEMENT IN SMALL-SCALE EMBEDDED MICROPROCESSORS WITH BLOCK MULTITHREADING: EXTENSIONS, CHARACTERIZATION AND TRADEOFFS", CONFERENCE PROCEEDINGS OF THE 2001 IEEE INTERNATIONAL PERFORMANCE, COMPUTING, AND COMMUNICATIONS CONFERENCE. (IPCCC). PHOENIX, AZ, APRIL 4 - 6, 2001, IEEE INTERNATIONAL PERFORMANCE, COMPUTING AND COMMUNICATIONS CONFERENCE, NEW YORK, NY : IEEE, US, vol. CONF. 20, 4 April 2001 (2001-04-04), pages 319-328, XP001049966, ISBN: 0-7803-7001-5

## Description

The present application relates to commonly owned U.S. Patent Application No. 11/084, 364 entitled -- "Dual Thread Processor" by Hong-Yi Chen and Sehat Sutardja, filed concurrently herewith.

### BACKGROUND

The following disclosure relates to processing circuits and systems.

Conventional operating systems typically support multitasking, which is a scheduling scheme that permits more than one processor thread to share common processing resources. A processor thread represents an architectural state within a processor that tracks execution of a software program. In the case of a computer having a single processor, only one processor thread is processed at any given point in time, meaning that the processor is actively executing instructions associated with a single processor thread. The act of re-assigning a processor from one processor thread to another is called a context switch.

In a conventional pipeline processor, a context switch typically occurs through a hardware interrupt and interrupt service routine. Interrupt service routines typically have an associated execution time, or interrupt overhead, that may consume valuable processor time. Additionally, in a conventional pipeline processor, a context switch typically occurs only at fixed intervals (e.g., every 100 *µ*s), as determined by, e.g., vendors of an operating system.

Haskins J W et al Institute of Electrical and Electronics Engineers: "Inexpensive throughput enhancement in small-scale embedded microprocessors with block multithreading: Extensions, characterization and tradeoffs", Conference proceedings of the 2001 IEEE International Performance, Computing and Communications Conference (IPCCC), Phoenix, AZ, April 4-6, 2001, IEEE International Performance, Computing and Communications Conference, New York, NY: IEEE, US, vol. Conf. 20, 4 April 2001, pages 319-328 describes a differential multi-threading (dMT) processor that allows two threads to be present on the CPU at any given time. The identity of the current active thread is held in the thread register. Simultaneously hosting two instruction streams requires that the program counter and register file be replicated (one per hardware context). The pipeline registers are duplicated by dMT between the fetch-decode, decode-execute and execute-memory stages. These duplicated pipeline registers are used to capture in-flight instructions. If precise exceptions are not important, then the execute-memory register need not be duplicated. Independent instructions could be routed around a cache miss directly to WB stage. Each data and control signal entering the duplicated pipeline registers has a fanout of two: one copy into each "half" of the pipeline register. Each resulting half of the duplicated registers has a write-enable whose setting is determined by the active thread identified in the thread register. Only the half owned by the active thread is write-enabled; the other half holds the context of the stalled thread. Each signal entering the next stage requires a multiplexer to choose the correct pipeline input from one or the other half of the pipeline register. The thread register is also used to control these multiplexers.

### SUMMARY

The object of the invention is to provide a simplified multi-thread processor architecture. This object is solved by the invention as claimed in the independent claims. Preferred embodiments are defined by the dependent claims.

In general, in one aspect, this specification describes a hard disk controller including a multi-thread processor adapted to execute at least two threads of program code. The multi-thread processor includes an execution pipeline, and a thread control unit to control the execution pipeline to execute servo related program code as a first thread and system level program code as a second thread.

Particular implementations can include one or more of the following. The hard disk controller can further include a memory to store the servo related program code and the system level program code. The memory can store user provided program code. The thread control unit can control the execution pipeline to execute the user provided program code as a third thread. The execution pipeline can include an instruction fetch unit, a decoder responsive to the instruction fetch unit, an issue unit responsive to the decoder, and an execution unit responsive to the issue unit. The system level program code can include at least one of disk drive data capture program code, error correction program code, host protocol management program code, cache management program code, or defect manager program code. The host protocol management program code can manage at least one of the following protocols ATA, USB, SATA, SAS, FC, CE-ATA, SDIO. The hard disk controller can further include a second multi-thread processor adapted to execute at least two threads of program code. The second multi-thread processor can include a second execution pipeline, and a second thread control unit to control the second execution pipeline to execute first real-time program code as a third thread and second real-time program code as a fourth thread. The second multi-thread processor can execute a given thread of program code not executed by the first multi-thread processor. The hard disk controller can further include a read channel.

In general, in another aspect, this specification describes a DVD controller including a multi-thread processor adapted to execute at least two threads of program code. The multi-thread processor includes an execution pipeline, and a thread control unit to control the execution pipeline to execute servo related program code as a first thread and system level program code as a second thread.

In general, in another aspect, this specification describes a media player device including a multi-thread processor adapted to execute at least two threads of program code. The multi-thread processor includes an execution pipeline, and a thread control unit to control the execution pipeline to execute media processing related program code as a first thread and system level program code as a second thread.

In general, in another aspect, this specification describes a cellular WLAN system including a multi-thread processor adapted to execute at least two threads of program code. The multi-thread processor includes an execution pipeline, and a thread control unit to control the execution pipeline to execute cellular communication related program code as a first thread and system level program code as a second thread.

Particular implementations can include one or more of the following features. The cellular communication related program code can relate to one or more of the following protocols CDMA, G3, GSM, or the like. The system level program code can include at least one of menu program code, display program code, MAC program code, WLAN program code, network communication program code, error correction program code, video processing program code, audio processing program code, host protocol management program code, cache management program code, defect manager program code, encryption/decryption program code, compression/decompression program code, wireless/wired communication program code or security management program code.

In general, in another aspect, this specification describes a VoIP system including a multi-thread processor adapted to execute at least two threads of program code. The multi-thread processor includes an execution pipeline, and a thread control unit to control the execution pipeline to execute voice processing related program code as a first thread and system level program code as a second thread.

Particular implementations can include one or more of the following features. The thread control unit can further control the execution pipeline to execute codec related program code as a third thread. The voice processing related program code can be program code associated with processing voice signals for conversion to a suitable form for transmission over a network. The system level program code can include at least one of MAC program code, WLAN program code, network communication program code, error correction program code, video processing program code, audio processing program code, host protocol management program code, cache management program code, defect manager program code, encryption/decryption program code, compression/decompression program code, wireless/wired communication program code or security management program code.

In general, in another aspect, this specification describes a wireless network device system including a multi-thread processor adapted to execute at least two threads of program code. The multi-thread processor includes an execution pipeline, and a thread control unit to control the execution pipeline to execute wireless network related program code as a first thread and system level program code as a second thread.

Particular implementations can include one or more of the following features. The wireless network related program code can include at least one of routing program code, network program code, access point program code, repeater program code, security program code, virtual private network program code or program code implementing a wireless communication protocol. The system level program code can include at least one of MAC program code, WLAN program code, network communication program code, error correction program code, video processing program code, audio processing program code, host protocol management program code, cache management program code, defect manager program code, encryption/decryption program code, compression/decompression program code, wired communication program code or security management program code.

In general, in another aspect, this specification describes a wireless television system including a multi-thread processor adapted to execute at least two threads of program code. The multi-thread processor includes an execution pipeline, and a thread control unit to control the execution pipeline to execute media related program code as a first thread and system level program code as a second thread.

Particular implementations can include one or more of the following features. The media related program code can include at least one of video processing program code or audio processing program code. The system level program code can include at least one of MAC program code, WLAN program code, network communication program code, error correction program code, video processing program code, audio processing program code, host protocol management program code, cache management program code, defect manager program code, encryption/decryption program code, compression/decompression program code, wired/wireless communication program code or security management program code.

In general, in another aspect, this specification describes a broadband modem including a multi-thread processor adapted to execute at least two threads of program code. The multi-thread processor includes an execution pipeline, and a thread control unit to control the execution pipeline to execute broadband communication related program code as a first thread and system level program code as a second thread.

Particular implementations can include one or more of the following. The broadband communication related program code includes cable communication program code, DSL communication code, or satellite communication program code. The system related code can include at least one of MAC program code, WLAN program code, network communication program code, error correction program code, video processing program code, audio processing program code, host protocol management program code, cache management program code, defect manager program code, encryption/decryption program code, compression/decompression program code, wired/wireless communication program code or security management program code.

In general, in another aspect, this specification describes a wired router including a multi-thread processor adapted to execute at least two threads of program code. The multi-thread processor includes an execution pipeline, and a thread control unit to control the execution pipeline to execute networking related program code as a first thread and system level program code as a second thread.

Particular implementations can include one or more of the following features. The networking related program code can include at least one of routing program code, access point program code, security program code, repeater program code, virtual private networking program code or program code implementing a communication protocol. The system level program code can include at least one of MAC program code, WLAN program code, network communication program code, error correction program code, video processing program code, audio processing program code, host protocol management program code, cache management program code, defect manager program code, encryption/decryption program code, compression/decompression program code, wireless communication program code or security management program code.

In general, in another aspect, this specification describes a real-time controller including a multi-thread processor adapted to execute at least two threads of program code. The multi-thread processor includes an execution pipeline, and a thread control unit to control the execution pipeline to execute media related program code as a first thread and system level program code as a second thread.

In general, in another aspect, this specification describes a method that includes providing a first real-time program code; providing a second real-time program code; executing the first real-time program code with a first processor thread though an execution pipeline of a multi-thread processor; and executing the second real-time program code with a second processor thread though the execution pipeline of the multi-thread processor.

In general, in another aspect, this specification describes a real-time controller. The real-time controller includes means for executing at least two threads of program code. The means for executing includes execution pipeline means, and means for controlling the execution pipeline means to execute first real-time program code as a first thread and second real-time program code as a second thread.

Particular implementations can include one or more of the following features. The real-time controller can include means for storing the first real-time program code and the second real-time program code. The means for storing can further store user provided program code. The means for controlling can control the execution pipeline means to execute the user provided program code as a third thread. The execution pipeline means can include means for fetching an instruction, means for decoding a fetched instruction, means for issuing a decoded instruction, and means for executing an issued instruction. The real-time controller can further include a second means for executing at least two threads of program code. The second means for executing includes a second execution pipeline means, and means for controlling the second execution pipeline means to execute third real-time program code as a third thread and fourth real-time program code as a fourth thread.

In general, in another aspect, this specification describes a real-time controller including means for providing a first real-time program code; means for providing a second real-time program code; means for executing the first real-time program code with a first processor thread though an execution pipeline of a multi-thread processor; and means for executing the second real-time program code with a second processor thread though the execution pipeline of the multi-thread processor.

Particular implementations can include one or more of the following. The first real time code can be video processing program code and the second real time code can be audio program code.

Implementations can include one or more of the following advantages. Applications including a single multi-thread processor are included that do not require multi-processor (e.g., CPU-to-CPU) management. Consequently, processor time associated with multi-processor management is eliminated. Reduction in the number of CPUs within an application further reduces manufacturing costs associated with a given application. Further, a multi-thread processor guarantees that computing resources are available for a given program code through an available processor thread that can be dedicated to the program code. A multi-thread processor also allows for independent development of software codes to be executed by the multi-thread processor.

The details of one or more implementations are set forth in the accompanying drawings and the description below. Other features and advantages will be apparent from the description and drawings, and from the claims.

### DESCRIPTION OF DRAWINGS

FIG. 1 is a block diagram of a multi-thread pipeline processor architecture.

FIG. 2 is method of operation for a multi-thread processor configured in accordance with the multi-thread pipeline processor architecture of FIG. 1.

FIG. 3 is a block diagram of a multi-thread pipeline processor in accordance with the multi-thread pipeline processor architecture of FIG. 1.

FIG. 4 is a block diagram of a multi-thread pipeline processor architecture.

FIG. 5 is a block diagram of a multi-thread pipeline processor in accordance with the multi-thread pipeline processor architecture of FIG. 4.

FIG. 6 is a method of performing exception handling in the multi-thread pipeline processor architectures of FIGS. 1 and 4.

FIG. 7 is a method of performing interrupt handling in the multi-thread pipeline processor architectures of FIGS. 1 and 4.

FIG. 8 is a functional block diagram of a hard disk drive system including a multi-thread processor.

FIG. 9 is a functional block diagram of a digital versatile disc (DVD) systemincluding a multi-thread processor.

FIG. 10 is a functional block diagram of cellular WLAN (Wireless Local Area Network) system including a multi-thread processor.

FIG. 11 is a functional block diagram of a VoIP system including a multi-thread processor.

FIG. 12 is a functional block diagram of a wireless network device including a multi-thread processor.

FIG. 13 is a functional block diagram of a wireless television system including a multi-thread processor.

FIG. 14 is a functional block diagram of a broadband modem including a multi-thread processor.

FIG. 15 is a functional block diagram of a wired router including a multi-thread processor.

FIG. 16 is a functional block diagram of a wireless media player including a multi-thread processor.

FIG. 17 is a functional block diagram of a real-time controller including a multi-thread processor.

Like reference symbols in the various drawings indicate like elements.

### DETAILED DESCRIPTION

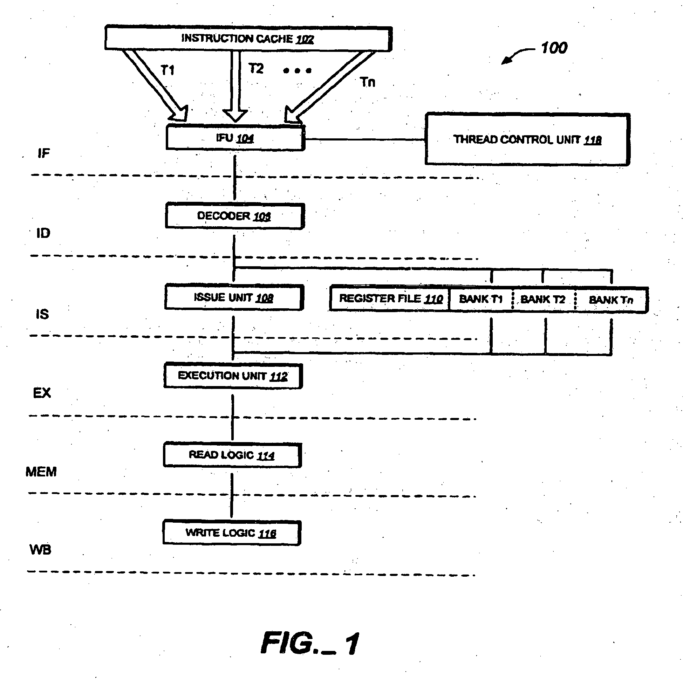

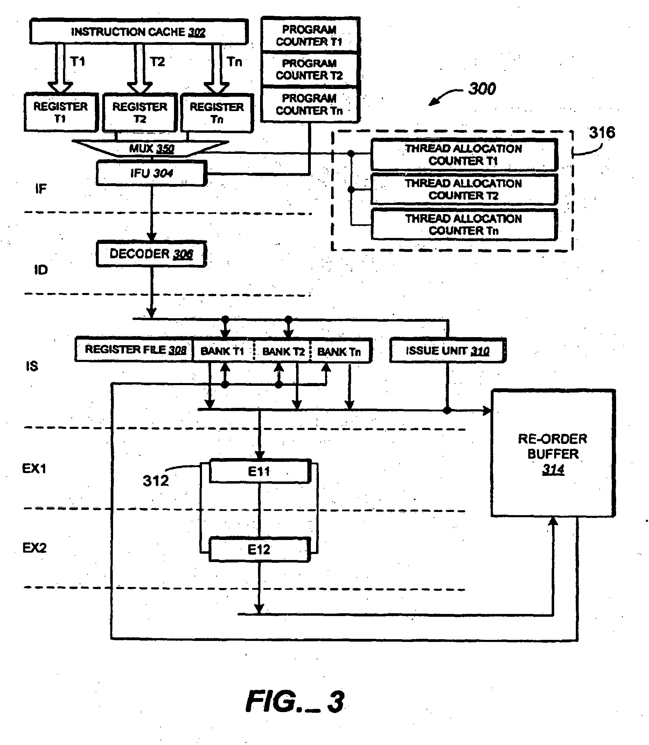

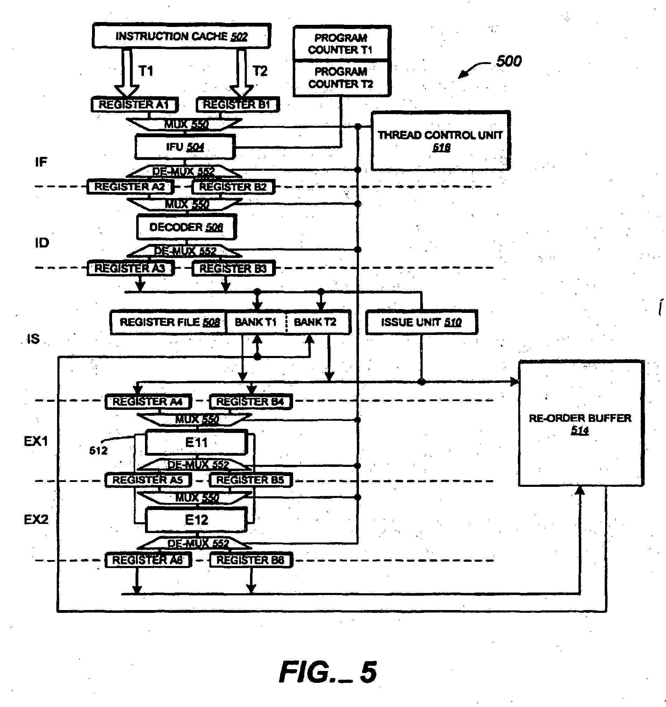

FIG. 1 is a block diagram of a multi-thread pipeline processor architecture 100 that is operable to process two or more processor threads T1, T2, ... Tn. Processor threads T1, T2, ... Tn each represent an architectural state within multi-thread pipeline processor architecture 100 that tracks execution of corresponding software programs. Instructions for the software programs can be retrieved from, for example, an instruction cache (e.g., instruction cache 102). In one implementation, multi-thread pipeline processor architecture 100 includes two or more program counters (not shown) each of which corresponds to a processor thread T1, T2, ... Tn. Each program counter indicates where (for a corresponding processor thread T1, T2, ... Tn) multi-thread pipeline processor architecture 100 is with respect to an instruction sequence. Program counters are discussed in greater detail below in association with FIGS. 3 and 5.

In one implementation, multi-thread pipeline processor architecture 100 includes six pipeline stages. The six pipeline stages include an instruction fetch stage (IF), an instruction decode stage (ID), an instruction issue stage (IS), an instruction execution stage (EX), a data memory read stage (MEM), and write back stage (WB). Multi-thread pipeline processor architecture 100, however, can include a different number of pipeline stages. Multi-thread pipeline processor architecture 100 further includes an instruction fetch unit (IFU) 104, a decoder 106, issue unit 108, a register file 110, an execution unit 112, read logic 114, write logic 116, and a programmable thread allocation controller (or thread control unit) 118.

Instruction fetch unit 104 retrieves program instructions from, e.g., instruction cache 102. Decoder 106 decodes the program instructions and generates decoded instructions to be executed by execution unit 112. In one implementation, the decoded instructions are fixed length micro-op instructions. Issue unit 108 issues decoded instructions to execution unit 112 for execution. Execution unit 112 can be a load execution unit, store execution unit, arithmetic logic unit (ALU), multiply and accumulate (MAC) unit, or a composite load/store execution unit as described in U.S. patent application No. 11/070, 780 entitled -- "Variable Length Pipeline Processor Architecture" by Hong-Yi Chen and Jensen Tjeng. Read logic 114 reads data from, e.g., a data cache (not shown). Write logic 116 writes results of executed instructions back to, e.g., a data cache, register file 110, or a re-order buffer (not shown).

Register file 110 stores data associated with each processor thread T1, T2, ... Tn. In one implementation, register file 110 includes separate banks (e.g., banks T1, T2, ... Tn) that store data associated with a corresponding processor thread T1, T2, ... Tn. For example, if write logic 116 is writing data associated with processor thread T2 back to register file 110, then write logic 116 writes the data to bank T2 of register file 110. Alternatively, a separate register file (not shown) for storing data corresponding to each processor thread T1, T2, ... Tn can be implemented within multi-thread pipeline processor architecture 100.

Programmable thread allocation controller 118 can be programmed to store processor time allocations that have been defined for each processor thread T1, T2, ... Tn - i.e., what portion of processor time will be dedicated to each processor thread T1, T2, ... Tn. In one implementation, input , e.g., from a user, defining portions of processor time to be allocated to each of a plurality of processor threads (e.g., processor threads T1, T2, ... Tn) is received through a graphical user interface (not shown). For example, a user can allocate 95% of processor time to a first processor thread and 5% to a second processor thread for a dual thread pipeline processor. In one implementation, the processor time allocation defined for each processor thread (e.g., processor threads T1, T2, ... Tn) can be dynamically changed - i.e., changed during program execution - by a user or preferably by a software program (e.g., a software program to be executed). Alternatively, the processor time allocation for each processor thread can be statically set - i.e., not changeable during program execution.

In one implementation, programmable thread allocation controller 118 performs a context switch automatically by determining a processor thread from which a next instruction will be fetched (e.g., by instruction fetch unit 104). In one implementation, programmable thread allocation controller 118 performs a context switch by switching one or more selectors ,e.g., multiplexers and/or de-multiplexers (not shown) that are in communication with instruction fetch unit 104. One implementation of a processor including multiplexers and de-multiplexers that performs context switches is discussed below in association with FIGS. 3, 4, and 5. When a context switch occurs, an instruction associated with a next processor thread is fetched by instruction fetch unit 104. Though the pipeline stages (e.g., pipeline stages IF, ID, IS, EX, MEM, WB) of multi-thread pipeline processor architecture 100 may contain instructions associated with two or more processor threads, data associated with each given processor thread is maintained separately through register file 110, thus, the integrity of data associated with each processor thread is maintained.
Unlike a conventional pipeline processor that may require an interrupt service routine, programmable thread allocation controller 118 does not have any interrupt overhead associated with performing a context switch.

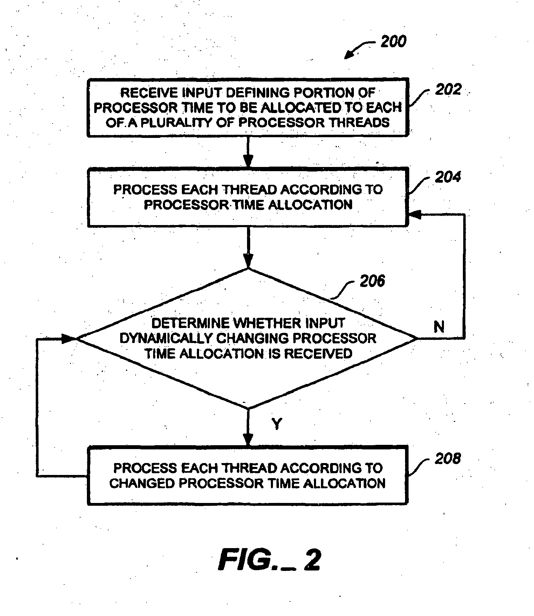

FIG. 2 shows a method 200 for processing processor threads through a multi-thread pipeline processor architecture (e.g., multi-thread pipeline processor architecture 100). Input defining a portion of processor time to be allocated to each of a plurality of processor threads is received (step 202). In one implementation, input allocations are received from a user through a graphical user interface. In one implementation, input allocations are determined based on requirements of an executing software application. The processor time allocated to each processor thread can be stored in a programmable thread allocation controller (e.g., programmable thread allocation controller 118). In one implementation, processor time is allocated based on CPU (Central Processing Unit) cycles, clock cycles and/or instruction cycles.

Each thread is processed by the multi-thread pipeline processor according to the processor time allocated to each thread (step 204). In one implementation, a context switch occurs automatically according to the processor time allocated to each thread as stored in the programmable thread allocation controller. In one implementation, a programmable thread allocation controller controls switching of one or more multiplexers and/or de-multiplexers that are in communication with an instruction fetch unit (e.g., instruction fetch unit 104). In one implementation, a programmable thread allocation controller controls switching of one or more multiplexers and/or de-multiplexers located before and after each pipeline stage of the multi-thread pipeline processor to perform a context switch, as discussed in greater detail below. In this implementation, a state of a processor thread is stored in, and loaded from, registers that are located before and after each pipeline stage in the pipeline processor. In one implementation, context switches occur at the end of a given instruction cycle.

A determination is made (e.g., through programmable thread allocation controller 118) whether input dynamically changing the processor time allocation is received (step 206). If the processor time allocated to each processor thread has not been dynamically changed, then each processor thread is processed according to the processor time allocation as previously established, and method 200 returns to step 204. If the processor time allocation has been dynamically changed, then each processor thread is processed according to the changed processor time allocation (step 208). After step 208, method 200 returns to step 206, discussed above.

FIG. 3 illustrates a block diagram of a multi-thread pipeline processor 300 built in accordance with multi-thread pipeline processor architecture 100 that processes (n) processor threads T1, T2, ... Tn. In one implementation, multi-thread pipeline processor 300 includes an instruction fetch unit 304, a decoder 306, a register file 308, issue unit 310, a two-stage execution unit 312, a re-order buffer 314, and a programmable thread allocation controller 316. Multi-thread pipeline processor 300 further includes registers T1-Tn and program counters T1-Tn that respectively correspond to processor threads T1, T2, ... Tn. Multi-thread pipeline processor 300 further includes multiplexer 350.

In one implementation, during an instruction fetch (IF) stage, instruction fetch unit 304 retrieves an instruction to be executed from, for example, instruction cache 302. Instruction fetch unit 304 retrieves instructions in accordance with program counters T1, T2, ... Tn. In one implementation, program counter T1 indicates an execution status of processor thread T1 (i.e., where multi-thread pipeline processor 300 is with respect to an instruction sequence associated with processor thread T1), program counter T2 indicates an execution status associated with processor thread T2, and program counter Tn indicates an execution status associated with processor thread Tn.

During an instruction decode stage (ID), instructions retrieved by instruction fetch unit 304 are decoded.

During an instruction issue stage (IS), in one implementation, the decoded instructions are sent to re-order buffer 314 (through issue unit 310). Re-order buffer 314 stores the decoded instructions until the decoded instructions are issued for execution. In one implementation, re-order buffer 314 is a circular buffer.

Re-order buffer 314 also stores the results of executed instructions until the executed instructions are ready for retirement, e.g., into register file 308. In one implementation, register file 308 includes banks (e.g., banks T1, T2, ... Tn) that correspond to each processor thread (e.g., processor threads T1, T2, ... Tn) processed by multi-thread pipeline processor 300. Bank T1 holds data associated with processor thread T1, bank T2 holds data associated with processor thread T2, and bank Tn holds data associated with processor thread Tn. The data can include operands and/or results of executed instructions associated with a given processor thread. In one implementation, multi-thread pipeline processor 300 does not include a re-order buffer.

During executions stages EX1, EX2, execution unit 312 executes the decoded instructions issued from issue unit 310. Execution unit 312 can be any type of execution unit, as discussed above. Though execution unit 312 is shown as having two pipeline stages, execution unit 312 can have a different number of pipeline stages. In one implementation, results of the executed instructions are written back to re-order buffer 314, and then retired to register file 308.

Programmable thread allocation controller 316 is operable to be programmed to store processor time allocation for each processor thread T1, T2, ... Tn - i.e., how much processor time will be dedicated to each processor thread T1, T2, ... Tn. In one implementation, input, e.g., from a user, allocating portions of processor time to each processor thread T1, T2, ... Tn is received through a graphical user interface (not shown). In one implementation, the processor time allocation for each processor thread T1, T2, ... Tn can be dynamically changed by a user. In one implementation, the processor time allocation for each processor thread T1, T2, ... Tn is changed dynamically through a software application being processed by multi-thread pipeline processor 300.

In one implementation, programmable thread allocation controller 316 automatically performs a context switch between processor threads T1, T2, ... Tn by switching multiplexer 350 that is in communication with instruction fetch unit 304. For example, during a time that multi-thread pipeline processor 300 is processing processor thread T1, multiplexer 350 is controlled to pass instructions associated with processor thread T1 through the pipeline stages of multi-thread pipeline processor 300.
When a context switch occurs from processor thread T1, multiplexer 350 is controlled to pass instructions associated with another processor thread, e.g., processor thread T2. In one implementation, multiplexer 350 is an n-to-1 multiplexer.

In one implementation, programmable thread allocation controller 316 includes a plurality of thread allocation counters (e.g., thread allocation counters T1-Tn) that determine a weighting that corresponds to processor time allocated to each processor thread. For example, in one implementation, each of thread allocation counters T1-Tn contains a value that represents how many CPU cycles are allocated for each thread. For example, if thread allocation counter T1 contains a value of 256, thread allocation counter T2 contains a value of 16, and thread allocation counter Tn contains a zero value, then instructions will be first fetched from processor thread T1 for 256 CPU cycles, then instructions will be fetched from processor thread T2 for 16 CPU cycles, and zero instructions will be fetched from processor thread Tn. Instructions are then fetched from processor threads T1 and T2 again for another 256 CPU cycles and 16 CPU cycles, respectively, and so on. The instruction fetching can continue accordingly until the values within one or more of the thread allocation counters are changed. As each thread allocation counter T1-Tn reaches a zero value, then programmable thread allocation counter 316 switches multiplexer 350 to pass instructions associated with a next processor thread to instruction fetch unit 304 for processing.

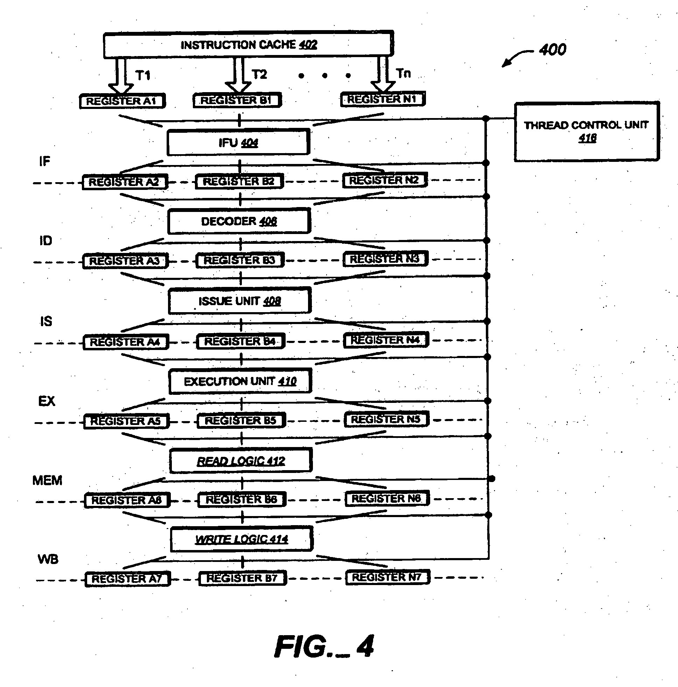

FIG. 4 is a block diagram of a multi-thread pipeline processor architecture 400 that is operable to process two or more processor threads T1, T2, ... Tn. Instructions associated with processor threads T1, T2, ... Tn can be retrieved from, for example, an instruction cache (e.g., instruction cache 402).

In one implementation, multi-thread pipeline processor architecture 400 includes six pipeline stages. The six pipeline stages include an instruction fetch stage (IF), an instruction decode stage (ID), an instruction issue stage (IS), an instruction execution stage (EX), a data memory read stage (MEM), and write back stage (WB). Multi-thread pipeline processor architecture 400, however, can include a different number of pipeline stages. Multi-thread pipeline processor architecture 400 further includes an instruction fetch unit (IFU) 404, decoder 406, issue unit 408, an execution unit 410, read logic 412, write logic 414, and a programmable thread allocation controller 416. Multi-thread pipeline processor architecture 400 is similar to multi-thread pipeline processor architecture of FIG. 1, however, multi-thread pipeline processor architecture 400 further includes a set registers (e.g., registers A1-A7, B1-B7, N1-N7) located between each pipeline stage (one before and after each stage) for storing a state of a corresponding processor thread T1, T2, ... Tn during a context switch.

Registers A1-A7 store a state of processor thread T1.
In a like manner, registers B1-B7 store a state of processor thread T2, and registers N1-N7 store a state of processor thread Tn. In one implementation, each register A1-A7, B1-B7, N1-N7 stores a state of a corresponding processor thread including storing a state of data produced by a corresponding pipeline stage of multi-thread pipeline processor architecture 400 at the end of given instruction cycle. For example, when processing instructions associated with processor thread T1, at the end of an instruction cycle register A3 can store a state of data for processor thread T1 received from decoder 406, and register A5 can store a state of data received from execution unit 410. Registers A1-A7, B1-B7, N1-N7 facilitate context switches in that they permit a state of a corresponding processor thread to be directly loaded from (or stored to) a given register. In one implementation, each set of registers A1-A7, B1-B7, N1-N7 is located relatively close to a functional unit within multi-thread pipeline processor architecture 400 (e.g., between each pipeline stage) and permits fast context switching times.

In one implementation, programmable thread allocation controller 416 performs a context switch automatically by switching one or more multiplexers and/or de-multiplexers (not shown) located before or after each pipeline stage (e.g., pipeline stages IF, ID, IS, EX, MEM, WB). One implementation of a processor including multiplexers and de-multiplexers that performs context switches is discussed below in association with FIG. 5. When a context switch occurs, one set of registers (e.g., registers A1-A7) associated with a current processor thread (e.g., processor thread T1) from which the context switch is to occur stores a state of the current processor thread. To complete the context switch, a state of a next processor thread (e.g., processor thread T2) is loaded from a different set of registers (e.g., registers B1-B7) associated with the next processor thread. The pipeline processor processes the next processor thread in the following instruction cycle. In one implementation, context switches occur at the end of an instruction cycle (i.e., after data from a pipeline stage has been saved to an associated register) to permit seamless context switches.

FIG. 5 illustrates a block diagram of a multi-thread pipeline processor 500 built in accordance with multi-thread pipeline processor architecture 400 that processes two threads T1, T2. In one implementation, multi-thread pipeline processor 500 includes an instruction fetch unit 504, a decoder 506, a register file 508, issue unit 510, a two-stage execution unit 512, a re-order buffer 514, and a programmable thread allocation controller 516. Multi-thread pipeline processor 500 further includes a first set of registers A1-A6 that corresponds to processor thread T1, and a second set of registers B1-B6 that corresponds to processor thread T2. Multi-thread pipeline processor 500 further includes program counters T1, T2, multiplexers 550, and de-multiplexers 552.

In one implementation, during an instruction fetch (IF) stage, instruction fetch unit 504 retrieves an instruction to be executed from, for example, instruction cache 502. Instruction fetch unit 504 retrieves instructions in accordance with program counters T1, T2. In one implementation, program counter T1 indicates an execution status of processor thread T1 (i.e., where multi-thread pipeline processor 500 is with respect to an instruction sequence associated with processor thread T1), and program counter T2 indicates an execution status associated with processor thread T2.

During an instruction decode stage (ID), instructions retrieved by instruction fetch unit 504 are decoded.

During an instruction issue stage (IS), in one implementation, the decoded instructions are sent to re-order buffer 514 (through issue unit 510). Re-order buffer 514 stores the decoded instructions until the decoded instructions are issued for execution. In one implementation, re-order buffer 514 is a circular buffer.

Re-order buffer 514 also stores the results of executed instructions until the executed instructions are ready for retirement, e.g., into register file 508. In one implementation, register file 508 includes two banks T1, T2. Bank T1 holds data associated with processor thread T1, and bank T2 holds data associated with processor thread T2. Register file 508 can include a thread index (not shown) that indicates registers from which data will be loaded. The thread index ensures that data from a register associated with a currently executing processor thread will be loaded into register file 508.

During executions stages EX1, EX2, execution unit 512 executes the decoded instructions issued from issue unit 510. Execution unit 512 can be any type of execution unit, as discussed above. Though execution unit 512 is shown as having two pipeline stages, execution unit 512 can have a different number of pipeline stages. In one implementation, results of the executed instructions are written back to re-order buffer 514, and then retired to register file 508.

Programmable thread allocation controller 516 is operable to be programmed to store processor time allocation for each processor thread T1, T2. In one implementation, programmable thread allocation controller 516 automatically performs a context switch between processor threads T1, T2 by switching multiplexers 550 and de-multiplexers 552 located respectively before and after each pipeline stage (e.g., pipeline stages IF, ID, IS, EX1, EX2) of multi-thread pipeline processor 500. For example, during a time that multi-thread pipeline processor 500 is processing processor thread T1, multiplexers 550 and de-multiplexers 552 are controlled to pass instructions associated with processor thread T1 (through the pipeline stages of multi-thread pipeline processor 500). State information for processor thread T2 is stored in registers B1-B6. When a context switch occurs from processor thread T1, registers A1-A6 store a state of processor thread T1, and a state of processor thread T2 is loaded from registers B1-B6 (through multiplexers 550 and de-multiplexers 552) and processed by multi-thread pipeline processor 500. In one implementation, each of multiplexers 550 is a 2-to-1 multiplexer, and each of de-multiplexers 552 is a 1-to-2 de-multiplexer.

### Exception Handling

When a multi-thread pipeline processor (e.g., multi-thread pipeline processors 300, 500) built in accordance with multi-thread pipeline processor architectures 100, 400 detects an exception, the normal sequence of instruction execution is suspended. An exception is an event that causes suspension of normal program execution. Types of exceptions include, for example, addressing exceptions, data exceptions, operation exceptions, overflow exceptions, protection exceptions, underflow exceptions, and so on. An exception may be generated by hardware or software.

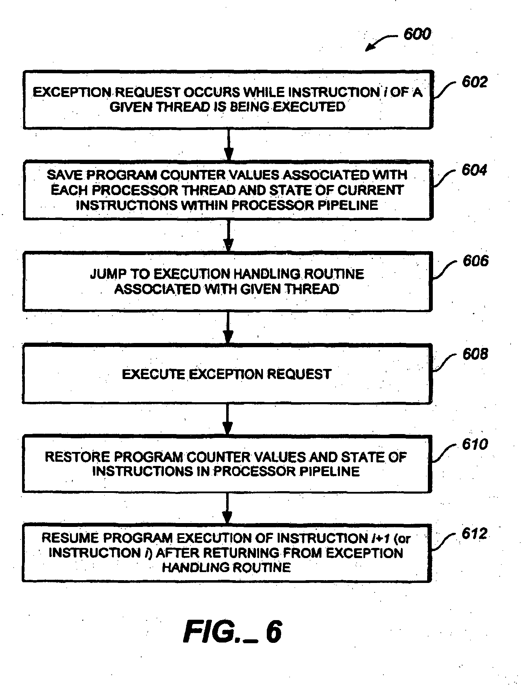

FIG. 6 illustrates a method for performing exception handling in a multi-thread pipeline processor implemented according to multi-thread pipeline processor architectures 100, 400. An exception request occurs while instruction i of a given thread is being executed (step 602). Program counter values associated with each processor thread are saved, along with a state of current instructions within the pipeline of the multi-thread processor (step 604). In one implementation, all instructions within the pipeline of the multi-thread processor are aborted, or flushed. The multi-thread processor jumps to an exception handling routine associated with a given thread (step 606). In one implementation, each processor thread has an associated exception handling routine that is separate and independent from exception handling routines associated with other processor threads. In one implementation, a single exception handling routine performs exception requests for all processor threads.

The exception request is executed by a given exception handling routine (step 608). After the exception request has been performed by the multi-thread processor, program counter values are restored within program counters of the processor, and a state of instructions (prior to the exception request) is restored within the pipeline of the multi-thread processor (step 610). The multi-thread processor resumes program execution of the next instruction (e.g., instruction i+1) after returning from an exception handling routine (step 612). In step 612, the multi-thread processor can resume program instruction at instruction i if the instruction is to be re-executed.

### Interrupt Handling

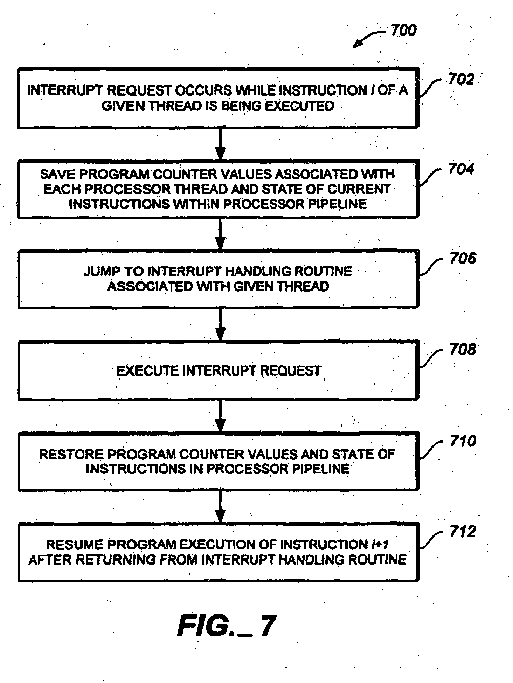

Interrupts within a multi-thread pipeline processor implemented according to multi-thread pipeline processor architectures 100, 400 are handled similarly to exceptions. FIG. 7 illustrates a method for handling interrupts in a multi-thread pipeline processor implemented according to multi-thread pipeline processor architectures 100, 400.

An interrupt occurs while instruction i of a given thread is being executed (step 702). Program counter values associated with each processor thread are saved, along with a state of current instructions within the pipeline of the multi-thread processor (step 704). The multi-thread processor jumps to an interrupt handling routine associated with a given thread (step 706). In one implementation, each processor thread has an associated interrupt handling routine having an entry point that is separate and independent from entry points associated with interrupt handling routines associated with other processor threads. An entry point is a starting address of an interrupt handling routine. In one implementation, a single interrupt handling routine (with a single entry point) performs interrupts for all processor threads.

The interrupt is executed by a given interrupt handling routine (step 708). After the interrupt has been performed by the multi-thread processor, program counter values are restored within program counters of the multi-thread processor, and a state of instructions (prior to the interrupt request) is restored within the pipeline of the multi-thread processor (step 710). The multi-thread processor resumes program execution of the next instruction (e.g., instruction i+1) after returning from an interrupt handling routine (step 712).

### Applications

A multi-thread pipeline processor built in accordance with pipeline processor architectures 100, 400 can be used in a wide range of applications, including more specifically real-time control applications. Example applications include data storage applications, wireless applications, computer system applications, cellular WLAN applications, voice-over-internet protocol (VOIP) applications, wireless and wired network device applications, wireless television applications, broadband modem applications, wired router applications, wireless media applications, real-time controller applications, and other applications as described in greater detail below. It will be appreciated by one of ordinary skill in the art that other multi-thread processor architectures may be used by the aforementioned applications. Independent software program threads can be developed without impacting other processor threads. Moreover, each processor thread can be guaranteed computing resources in accordance with processing allocations enforced by the multi-thread processor.

### Hard Disk Drive System

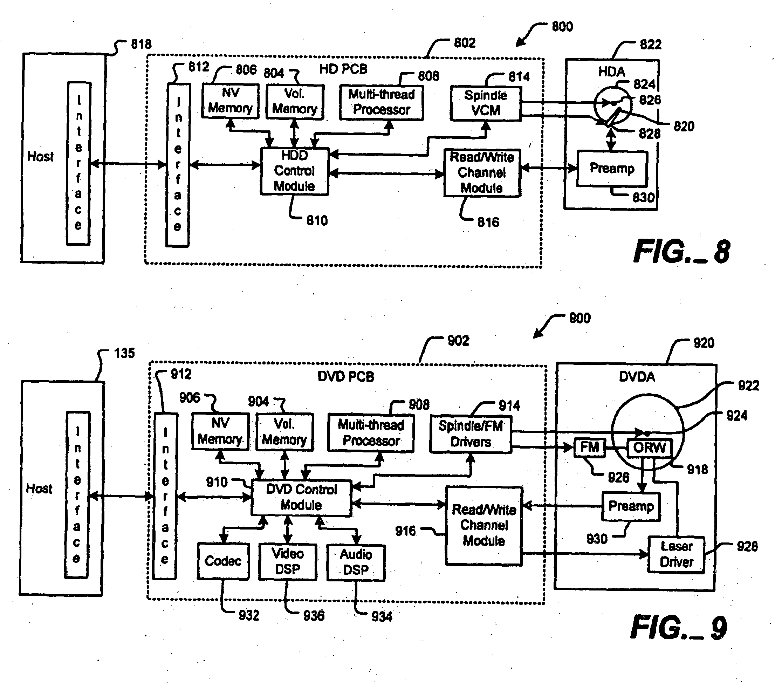

As shown in FIG. 8, a multi-thread processor 808 (e.g., multi-thread processors 300, 500, as discussed above) can be used within a hard disk drive system 800 to perform substantially all the processing functions associated with hard disk drive system 800.

Hard disk drive system 800 includes a printed circuit board 802. A volatile memory 804 stores read, write and/or volatile control data that is associated the control of the hard disk drive system 800. Volatile memory 804 can be a memory having low latency. For example, SDRAM or other types of low latency memory may be used. Nonvolatile memory 806 such as flash memory may also be provided to store critical data such as nonvolatile control code. The control code can include system level program code, including disk drive data capture program code, error correction program code, host protocol management program code, cache management program code, and defect manager program code. The host protocol management code can include program code that manages one or more of the following protocols Advanced Technology Attachment (ATA), Serial ATA (SATA), Consumer Electronics ATA (CE-ATA), Universal Serial Bus (USB), Serial Attached Small Computer System Interface (SAS), (Fibre Channel) FC, or Secure Digital Input/Output (SDIO). Volatile memory 804, nonvolatile memory 806, or other memory (e.g., cache memory) (not shown) can also store servo related program code - e.g., program code to operate a spindle/VCM driver 814 as discussed in greater detail below. Volatile memory 804, nonvolatile memory 806, or other memory can further store user provided program code - e.g., program code supplied by third parties. The user provided code can also be executed by multi-thread processor 808.

Multi-thread processor 808 performs data and/or control processing that is related to the operation of hard disk drive system 800. In one implementation, multi-thread processor 808 executes multiple processor threads that are each dedicated to a given processor function. For example, multiple processor threads executed by multi-thread processor 808 support the operation of hard disk control module (HDC) 810. Hard disk control module 810 communicates with an input/output interface 812, a spindle/voice coil motor (VCM) driver 814, and a read/write channel module 816. Through one or more processor threads executed by multi-thread processor 808, hard disk control module 810 coordinates control of the spindle/VCM driver 814, the read/write channel module 816 and data input/output with a host 818 through an interface 812.

As discussed above, multi-thread processor 808 can execute one or more processor threads that are dedicated to processing functions associated with read/write channel module 816. For example, during write operations, the read/write channel module 816 (through one or more processor threads executed by multi-thread processor 808) can encode data to be written onto by read/write device 820. Using multi-thread processor 808, read/write channel module 816 can also process a write signal for reliability and may apply, for example, error correction coding (ECC), run length limited coding (RLL), and so on, to data. Likewise, during read operations, read/write channel module 816 (using one or more processor threads executed by multi-thread processor 808) can convert an analog read signal output of read/write device 820 to a digital read signal. The converted signal can then be detected and decoded by conventional techniques to recover the data that was read by read/write device 820 using one or more processor threads executed by multi-thread processor 808.

Multi-thread processor 808 can also execute one or more processor threads that are dedicated to processing functions associated with a hard disk drive assembly (HDDA) 822. Hard disk drive assembly 822 includes one or more hard drive platters 824 that include magnetic coatings that store magnetic fields. The platters 824 are rotated by a spindle motor that is schematically shown at 826. Generally the spindle motor 826 rotates the hard drive platter 824 at a controlled speed during the read/write operations. One or more read/write arms 828 move relative to the platters 824 to read and/or write data to/from the hard drive platters 824. The spindle/VCM driver 814 controls the spindle motor 826, which rotates the platter 824. The spindle/VCM driver 814 also generates control signals that position the read/write arm 828, for example using a voice coil actuator, a stepper motor or any other suitable actuator. One or more processor threads executed by multi-thread processor 808 can be used to generate the control signals.

The read/write device 820 is located near a distal end of the read/write arm 828. The read/write device 820 includes a write element such as an inductor that generates a magnetic field. The read/write device 820 also includes a read element (such as a magneto-resistive (MR) element) that senses the magnetic field on the platter 824. Hard disk drive assembly 822 includes a preamp circuit 830 that amplifies the analog read/write signals. When reading data, the preamp circuit 830 amplifies low level signals from the read element and outputs the amplified signal to the read/write channel module 816.
While writing data, a write current is generated that flows through the write element of the read/write device 820. The write current is switched to produce a magnetic field having a positive or negative polarity. The positive or negative polarity is stored by the hard drive platter 824 and is used to represent data.

Portions of hard disk drive system 800 may be implemented by a one or more integrated circuits (IC) or chips. For example, multi-thread processor 808 and hard disk control module 810 may be implemented by a single chip. Spindle/VCM driver 814 and/or read/write channel module 816 may also be implemented by the same chip as multi-thread processor 808, hard disk control module 810 and/or by additional chips. Alternately, most of hard disk drive system 800 other than hard disk drive assembly 822 may be implemented as a system on chip (SOC)

### DVD System

Referring now to FIG. 9, a DVD system 900 is shown to include a DVD printed circuit board (PCB) 902, which includes a volatile memory 904 that stores read data, write data and/or volatile control code that is associated the control of the DVD system 900. Volatile memory 904 can include volatile memory such as SDRAM or other types of low latency memory. Nonvolatile memory 906, such as flash memory, can also be used for critical data such as data relating to DVD write formats and/or other nonvolatile control code. The control code can include control code as discussed above in connection with hard disk drive system 800 (FIG. 8). Volatile memory 904, nonvolatile memory 906, or other memory (e.g., cache memory) (not shown) can also store real-time program code that handles real-time data (e.g., real-time audio or video data).

A multi-thread processor 908 performs substantially all data and/or control processing that is related to the operation of the DVD system 900. In one implementation, multi-thread processor 908 performs all processing functions by executing multiple processor threads that are dedicated to corresponding processing functions discussed below. Multi-thread processor 908 can also perform decoding of copy protection and/or compression/decompression as needed.

A DVD control module 910 communicates with an input/output interface 912, a spindle/feed motor (FM) driver 914, and a read/write channel module 916. Through multi-thread processor 908, DVD control module 910 coordinates control of spindle/FM driver 914, a read/write channel module 916 and data input/output through an interface 912.

In one implementation, multi-thread processor 908 executes one or more processor threads that are dedicated to processing functions associated with read/write channel module 916. For example, during write operations, the read/write channel module 916 encodes the data to be written by an optical read/write (ORW) or optical read only (OR) device 918 to the DVD platter using program code executed by multi-thread processor 908. Using one or more processor threads executed by multi-thread processor 908, read/write channel module 916 processes the signals for reliability and may apply, for example, ECC, RLL, and the like. During read operations, the read/write channel module 916 converts an analog output of the ORW or OR device 918 to a digital signal. The converted signal is then detected and decoded by conventional techniques to recover the data that was written on the DVD (e.g., using program code executed by multi-thread processor 908).

Multi-thread processor 908 can also execute one or more processor threads that are dedicated to substantially all processing functions associated with a DVD assembly (DVDA) 920 discussed below. In one implementation, DVD assembly 920 includes a DVD platter 922 that stores data optically. The platter 922 is rotated by a spindle motor that is schematically shown at 924. The spindle motor 924 rotates the DVD platter 922 at a controlled and/or variable speed during the read/write operations. ORW or OR device 918 moves relative to the DVD platter 922 to read and/or write data from/to the DVD platter 922. ORW or OR device 918 typically includes a laser and an optical sensor.

During read operations for DVD read/write and DVD read only systems, the laser is directed at tracks on the DVD that contain lands and pits. The optical sensor senses reflections caused by the lands/pits. For DVD write applications, a laser may also be used to heat a die layer on DVD platter 922. In one implementation, if the die is heated to a first pre-determined temperature, the die becomes transparent and such can be used to represent a first binary digital value. If the die is heated to a second pre-determined temperature, the die becomes opaque and such can be used to represent a second binary digital value.

Multi-thread processor 908 can also execute one or more processor threads that are dedicated to substantially all the processing functions associated with Spindle/FM driver 914 discussed below. Spindle/FM driver 914 controls the spindle motor 924, which controllably rotates DVD platter 922. Spindle/FM driver 914 also generates control signals that position the feed motor 926, for example using a voice coil actuator, a stepper motor or any other suitable actuator. A feed motor 926 typically moves the ORW or OR device 918 radially relative to the DVD platter 922. A laser driver 928 generates a laser drive signal based on an output of the read/write channel module 916. DVD assembly 920 includes a preamp circuit 930 that amplifies analog read signals. When reading data, the preamp circuit 930 amplifies low level signals from ORW or OR device 918 and outputs the amplified signal to read/write channel module device 916.

DVD system 900 further includes a codec module 932 that encodes and/or decodes video such as any of the MPEG formats. One or more processor threads executed by multi-thread processor 908 can be allocated to codec module 932 for encoding/decoding purposes. Audio and/or video digital signal processors and/or modules 934 and 936, respectively, perform audio and/or video signal processing, respectively. One or more processor threads executed by multi-thread processor 908 can also be allocated to audio and video digital signal processors 934, 936 for signal processing.

As with hard disk drive system 800, portions of the DVD system 900 may be implemented by one or more integrated circuits (IC) or chips. For example, multi-thread processor 908 and DVD control module 910 may be implemented by a single chip. Spindle/FM driver 914 and/or read/write channel module 916 may also be implemented by the same chip as multi-thread processor 908, DVD control module 910 and/or by additional chips. In one implementation, most of DVD system 900 other than DVD assembly 920 may also be implemented as a SOC.

### Cellular WLAN System

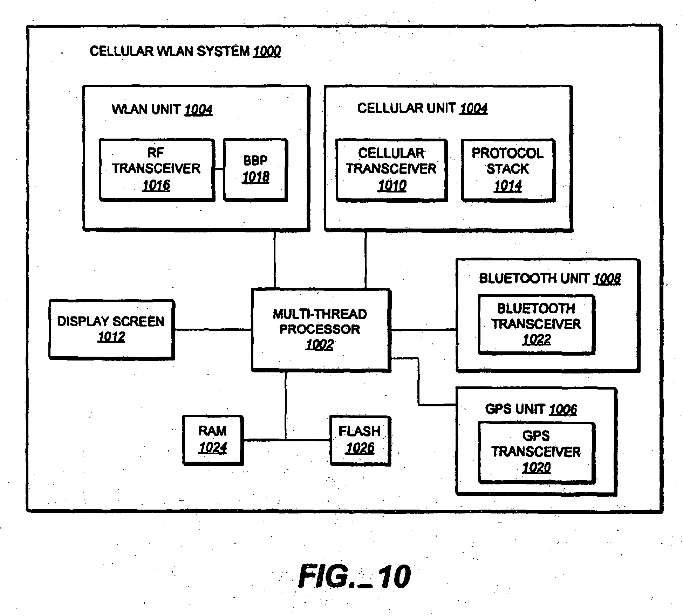

FIG. 10 illustrates a cellular wireless local area network (WLAN) system 1000 that includes a multi-thread processor 1002. In one implementation, multi-thread processor 1002 performs substantially all processing functions associated with cellular WLAN system 1000. Cellular WLAN system 1000 can be, for example, a cellular telephone with wireless fidelity (WI-FI) capability or a video phone. Cellular WLAN system 1000 can support one or more of the following multi-media features including a built-in digital camera or camcorder, a television (TV) tuner, a digital radio, and/or a walkie-talkie. In one implementation, multi-thread processor 1002 executes one or more processor threads that correspond to each of these multi-media features.

In one implementation, cellular WLAN system 1000 includes a WLAN unit 1004, a cellular unit 1006, a Bluetooth unit 1008, a global positioning system (GPS) unit 1010, and a display screen 1012. Optionally, cellular WLAN system 1000 may not include all these capabilities.

WLAN unit 1004 includes an RF transceiver 1014, a baseband processor (BBP) 1016, and a media access controller (MAC) (not shown). RF transceiver 1014 receives and transmits RF signals from/to other wireless devices and other network devices including, e.g., repeaters, routers, and so on. In one implementation, RF transceiver 1014 processes the RF signals from/to baseband in conformance with a radio frequency transmission protocol in use by the cellular WLAN system 1000. Baseband processor 1016 performs signal processing, including, for example, encoding/decoding and error correction. Multi-thread processor 1002 can execute,one or more processor threads that perform signal processing functions associated with baseband processor 1016. The MAC includes one or more routines for processing received/and to be transmitted signals and interfacing with network components. The routines can be executed using multi-thread processor 1002.

Cellular unit 1006 includes a cellular transceiver 1018 and a protocol stack 1020. In one implementation, cellular transceiver 1018 includes a GSM RF transceiver. In one implementation, cellular transceiver 1018 processes the GSM RF signals from/to baseband in conformance with a GSM radio frequency transmission protocol in use by protocol stack 1020. Other protocols can be implemented by protocol stack 1020, including Code Division Multiple Access (CDMA), G3, and other cell phone protocol standards. Signal processing management, menu functions, and the like associated with cellular telephone functions can be realized by one or more processor threads executing in multi-thread processor 1002.

Optionally, cellular WLAN system 1000 includes a Bluetooth unit 1008. Bluetooth unit 1008 includes a Bluetooth transceiver 1022. In one implementation, Bluetooth transceiver 1022 is a short range wireless transceiver. In one implementation, a digital signal processor (not shown) processes the Bluetooth signals (executing one or more processor threads) in conformance with a Bluetooth protocol in use by cellular WLAN system 1000.

Optionally, cellular WLAN system 1000 includes a GPS unit 1010. GPS unit 1006 includes a GPS transceiver 1020. In one implementation, GPS transceiver 1020 processes GPS RF signals from/to baseband in conformance with a GPS radio frequency transmission protocol in use by cellular WLAN system 1000. Other processing functions required to support the Bluetooth protocol can be realized by processor threads executed by multi-thread processor 1002.

Optionally, cellular WLAN system 1000 includes a display screen 1012. Display screen 1012 provides a graphical user interface for a user. In one implementation, display screen 1012 is a liquid crystal display. In one implementation, display screen 1012 displays video data associated with a video phone. The graphical user interface can be provided by one or more cellular operating systems stored in random access memory 1024, flash memory 1026, or other memory (not shown). In one implementation, multi-thread processor 1002 processes the operating system and any other program code instructions executing one or more associated processor threads. The program code can include real-time program code. The program code can also include cellular communication related program code or system level program code. In one implementation, the cellular communication related program code relates to one or more of the following protocols CDMA, G3, GSM, or the like. In one implementation, the system level program code includes at least one of menu program code, display program code, MAC program code, WLAN program code, network communication program code, error correction program code, video processing program code, audio processing program code, host protocol management program code, cache management program code, defect manager program code, encryption/decryption program code, compression/decompression program code, wireless/wired communication program code or security management program code. The program code can also be stored in random access memory 1024, flash memory 1026, or other memory. Other program codes can be stored, for example, user provided code as discussed above.

### VoIP system

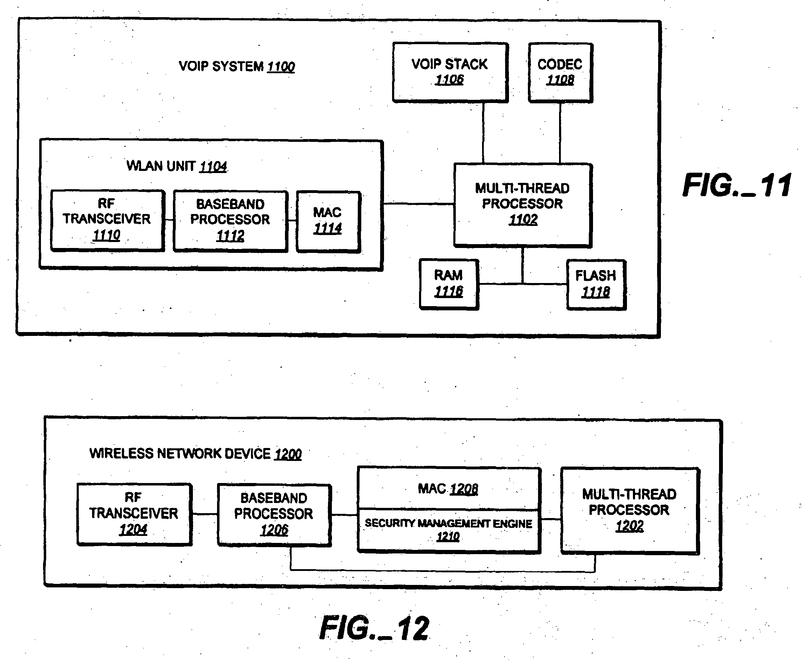

FIG. 11 illustrates a voice over internet protocol (VoIP) system 1100 that includes a multi-thread processor 1102. In one implementation, multi-thread processor 1102 performs substantially all the processing functions associated with VoIP system 1100. In one implementation, VoIP system 1100 includes a WLAN unit 1104, a VoIP stack 1106, and a codec 1108. Though VoIP system 1100 is shown as including a WLAN unit 1004, VoIP can include a LAN unit (not shown) for connection to a non-wireless local area network.

WLAN unit 1004 includes an RF transceiver 1110, a baseband processor 1112, and a media access controller (MAC) 1114. RF transceiver 1110 receives and transmits RF signals from/to other wireless devices and other network devices for transmission of voice data packets. In one implementation, RF transceiver 1110 processes the RF signals from/to baseband in conformance with a VoIP protocol in use by VoIP stack 1106. Baseband processor 1112 can perform signal processing, including, for example, encoding/decoding, compression/decompression, and error correction. Multi-thread processor 1102 can execute one or more processor threads to perform some or all of the processing functions associated with baseband processor 1112. MAC 1114 includes one or more processing routines (not shown) for processing received/and to be transmitted signals and interfacing with network components (using multi-thread processor 1102). In one implementation, codec 1108 converts digital signals to analog signals, and vice versa. The signal conversion can be processed using one or more processor threads executed by multi-thread processor 1102.

In one implementation, multi-thread processor 1102 processes program code instructions executing one or more associated processor threads. The program code can include real time program code. The program code can also include voice processing related program code and system level program code. In one implementation, the voice processing related program code is program code associated with processing voice signals for conversion to a suitable form for transmission over a network. In one implementation, the system level program code includes at least one of MAC program code, WLAN program code, network communication program code, error correction program code, video processing program code, audio processing program code, host protocol management program code, cache management program code, defect manager program code, encryption/decryption program code, compression/decompression program code, wireless/wired communication program code or security management program code. In one implementation, RAM memory 1116 and/or flash memory 1118 store real-time program code, user provided program code (discussed above), or other program code (discussed above) to be executed by VoIP system 1100.

### Wireless Network Device

FIG. 12 illustrates a wireless network device 1200 that includes a multi-thread processor 1202. Wireless network device 1200 can be for example, a wireless router, wireless access point, and so on. In one implementation, multi-thread processor 1202 performs substantially all processing functions associated with wireless network device 1200. In one implementation, wireless network device 1200 includes a RF transceiver 1204, a baseband processor 1206, and a MAC 1208. Wireless network device 1200 can include an interface to a wired LAN connection through, e.g., a firewall or (Virtual Private Network) VPN. RF transceiver 1204 receives and transmits RF signals from/to network devices including, for example, wireless clients (not shown). RF transceiver 1204 processes the RF signals from/to baseband in conformance with a radio frequency transmission protocol in use by wireless network device 1200. Baseband processor 1206 can perform signal processing, including, for example, encoding/decoding, compression/decompression and error correction. Multi-thread processor 1202 can execute one or more processor threads to perform some or all of the processing functions associated with baseband processor 1206. MAC 1208 includes one or more processing routines for processing received/and to be transmitted signals and interfacing with the network components that can be executed by (i.e., processor thread executed by) multi-thread processor 1202.

Optionally, multi-thread processor 1202 can be used to execute other program code associated with wireless network device 1200. In one implementation, MAC 1208 includes a security management engine 1210 for initializing and updating configuration information with one or more wireless clients. Security management engine 1210 can be used to generate a service set identifier (SSID), secure key and personal identification numbers (PIN) as required. Security management engine 1210 can be of the form of hardware (circuits), software, firmware or combinations thereof. In one implementation, multi-thread processor 1202 provides substantially all processing functions associated with MAC 1208.

In one implementation, multi-thread processor 1202 processes program code instructions executing one or more associated processor threads. The program code can include real time program code. The program code can also include wireless network related program code and system level program code. In one implementation, the wireless network related program code includes at least one of routing program code, network program code, access point program code, repeater program code or program code implementing a wireless communication protocol. In one implementation, the system level code includes at least one of MAC program code, WLAN program code, network communication program code, error correction program code, video processing program code, audio processing program code, host protocol management program code, cache management program code, defect manager program code, encryption/decryption program code, compression/decompression program code, wired communication program code or security management program code. In one implementation, RAM memory 1116 and/or flash memory 1118 store real-time program code, user provided program code (discussed above), or other program code (discussed above) to be executed by multi-thread processor 1202 of wireless network device 1200.

### Wireless Television System

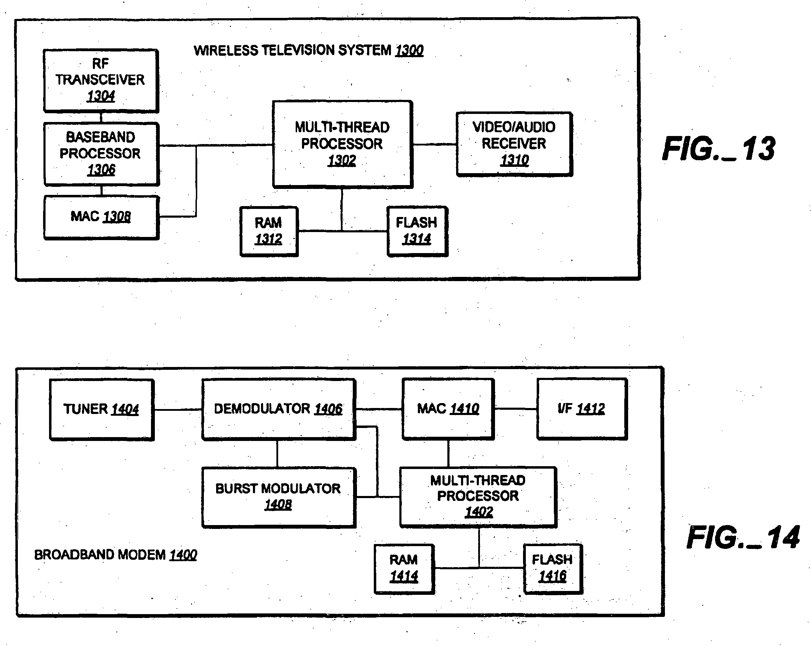

FIG. 13 illustrates a wireless television system 1300 that includes a multi-thread processor 1302. In one implementation, multi-thread processor 1302 performs substantially all the processing functions associated with wireless television system 1300. In one implementation, wireless television system 1300 includes a RF transceiver 1304, a baseband processor 1306, a MAC 1308, and a video/audio receiver 1310. RF transceiver 1304 receives and transmits RF signals from/to network devices including, for example, wireless router, access points, and so on. RF transceiver 1304 processes the RF signals from/to baseband in conformance with a radio frequency transmission protocol in use by wireless television system 1300. Baseband processor 1306 can perform signal processing, including, for example, encoding/decoding and error correction. Multi thread processor 1302 can execute one or more processor threads to perform some or all of the processing functions associated with baseband processor 1306. MAC 1308 includes one or more processing routines (executed by multi-thread processor 1302) for processing received/and to be transmitted signals and interfacing with the network components.

Video/audio receiver 1310 receives video and audio signals. The audio/video signals can be processed using one or more processor threads executed by multi-thread processor 1302. In one implementation, multi-thread processor 1302 also processes program code instructions executing one or more associated processor threads. The program code can include real time program code. The program code can also include media related program code and system level program code. In one implementation, the media related program code includes at least one of video processing program code, or audio processing program code. In one implementation, the system level program code includes at least one of MAC program code, WLAN program code, network communication program code, error correction program code, video processing program code, audio processing program code, host protocol management program code, cache management program code, defect manager program code, encryption/decryption program code, compression/decompression program code, wired/wireless communication program code or security management program code. In one implementation, RAM memory 1312, flash memory 1314, and/or other memory (not shown) store real-time program code or other program code for operating on, e.g., audio/video signals received through video/audio receiver 1310. Further examples of program codes include, for example, codecs.

### Broadband Modem

FIG. 14 illustrates a broadband modem 1400 that includes a multi-thread processor 1402. In one implementation, broadband modem 1400 is a cable, digital subscriber link (DSL), satellite, or the like, modem. In one implementation, multi-thread processor 1402 performs substantially all the processing functions associated with broadband modem 1400. Broadband modem 1400 can be connected to, for example, a cable television line and provide to a connected device (e.g., a computer system) a continuous connection to the Internet. In one implementation, broadband modem 1400 includes a tuner 1404, a demodulator 1406, a burst modulator 1408, a MAC 1410, and an interface (I/F) 1412. Demodulator 1406 and burst modulator 1408 can be implemented within a single chip.

In one implementation, tuner 1404 connects directly to a source (e.g., a cable TV (CATV) outlet). Tuner 1404 can include a build-in diplexer (not shown) to provide both upstream and downstream signals through tuner 1404. In one implementation, tuner 1404 receives digitally modulated Quadrature Amplitude Modulation (QAM) signals.

In the receive direction, demodulator 1406 generates an intermediate frequency (IF) signal. Demodulator 1406 can perform analog-to-digital (A/D) conversion, QAM-demodulation, MPEG frame synchronization, and error correction (e.g., Reed Solomon error correction). In the transmit direction, burst modulator 1408 provides a signal to tuner 1404. In one implementation, burst modulator 1408 performs encoding of each burst, modulation of a Quadrature Phase Shift Keying (QSPK)/QAM signal on a selected frequency, and D/A conversion.

MAC 1410 includes one or more processing routines (not shown) executed by multi-thread processor 1402 for processing received/and to be transmitted signals and interfacing with network components. MAC 1410 can be implemented in hardware or software, or a combination of both. Data that passes through MAC 1410 enters interface 1412. Interface 1412 can be, for example, an Ethernet interface, USB interface, or PCI bus interface.

In one implementation, multi-thread processor 1402 processes program code instructions executing one or more associated processor threads. The program code can include real time program code. The program code can also include broadband communication related program code and system level program code. In one implementation, the broadband communication related program code includes a cable communication program code, DSL communication program code, or satellite communication program code. In one implementation, the system level code includes at least one of MAC program code, WLAN program code, network communication program code, error correction program code, video processing program code, audio processing program code, host protocol management program code, cache management program code, defect manager program code, encryption/decryption program code, compression/decompression program code, wired/wireless communication program code or security management program code. In one implementation, RAM memory 1414 and/or flash memory 1416 store real time program code, user provided program code (discussed above), or other program code (discussed above) to be executed by broadband modem 1400.

### Wired Router

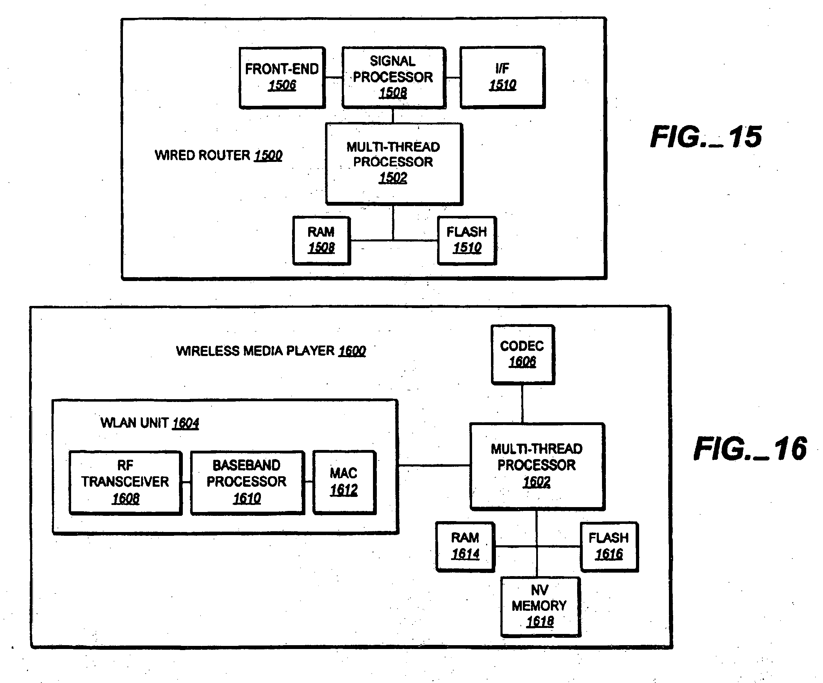

FIG. 15 illustrates a wired router 1500. In one implementation, wired router 1500 includes a multi-thread processor 1502, a front-end 1506, a signal processor 1508, and an interface (I/F) 1510. In one implementation, multi-thread processor 1502 performs substantially all the processing functions associated with wired router 1500.

In one implementation, front-end 1506 pre-amplifies, filters, and digitizes analog signals received from a phone line. Front-end 1506 can also amplify and filter analog signals created by a digital-to-analog converter (DAC) (not shown) and deliver analog signals at correct power levels. In one implementation, signal processor 1508 includes routines for performing signal processing including, for example, echo cancellation, error correction, digital coding, or rate adaptation that can be executed by multi-thread processor 1502. I/F 1510 allows wired router 1500 to be connected to high-speed devices.

In one implementation, multi-thread processor 1502 processes program code instructions executing one or more associated processor threads. The program code can include real time program code. The program code can also include networking related program code and system level program code. In one implementation, the networking related program code includes at least one of routing program code, access point program code, security program code, repeater program code or virtual private networking program code. In one implementation, the system level program code includes at least one of MAC program code, WLAN program code, network communication program code, error correction program code, video processing program code, audio processing program code, host protocol management program code, cache management program code, defect manager program code, encryption/decryption program code, compression/decompression program code, wireless communication program code or security management program code. In one implementation, RAM memory 1512 and/or flash memory 1514 store real time program code, user provided program code (discussed above), or other program code (discussed above) to be executed by wired router 1500.

### Wireless Media Player

FIG. 16 illustrates a wireless media player 1600 that includes a multi-thread processor 1602. In one implementation, multi-thread processor 1602 performs substantially all the processing functions associated with wireless media player 1600. Wireless media player 1600 can be any type of wireless device that outputs visual and/or audio data. The audio data can include audio data associated with, e.g., MP3/MP4, Enhanced Perceptual Audio Coder (EPAC), QDesign Music playback, Advanced Audio Coding (AAC), Liquid Audio, Microsoft (MS) Audio, Dolby Digital, Real Audio (RA), Free Lossless Audio Codec (FLAC), or Windows Media Audio (WMA). Wireless media player 1600 can be an MP3/MP4 player, a personal digital assistant (PDA), and so on. In one implementation, wireless media player 1600 includes a WLAN unit 1604, and a codec 1606.

In one implementation, WLAN unit 1604 includes an RF transceiver 1608, a baseband processor 1610, and a MAC 1612. RF transceiver 1612 receives and transmits RF signals from/to other wireless devices and other network devices. RF transceiver 1608 processes the RF signals from/to baseband in conformance with a radio frequency transmission protocol in use by wireless media player 1600. Baseband processor 1610 can perform signal processing, including, for example, encoding/decoding and error correction. Multi-thread processor 1602 can execute one or more processor threads to perform some or all of the processing functions associated with baseband processor 1610. MAC 1612 includes one or more processing routines (not shown) executed by multi-thread processor 1602 for processing received/and to be transmitted signals and interfacing with network components. In one implementation, codec 1606 includes program code to encode and/or decode a signals received by RF transceiver 1608. The encoding and/or decoding program code can be processed using one or more processor threads executed by multi-thread processor 1602. In one implementation, codec 1606 includes program code to compress and decompress data. Codec 1606 can be implemented in software, hardware, or a combination of both. Examples of codecs for computer video include MPEG, Indeo and Cinepak 2.

In one implementation, multi-thread processor 1602 processes program code instructions executing one or more associated processor threads. The program code can include real time program code. The program code can also include media related program code and system level program code. In one implementation, the media related program code includes audio related program code and video related program code. In one implementation, the system level program code includes at least one of servo related program code, disk drive data capture program code, error correction program code, video processing program code, audio processing program code, cache management program code, defect manager program code, or encryption and security management program code. In one implementation, RAM memory 1614, flash memory 1616, nonvolatile memory 1618, and/or other memory (not shown) can store real-time program code, user provided program code and/or other program code (discussed above) to be executed by wireless media player 1600.

### Real-Time Controller

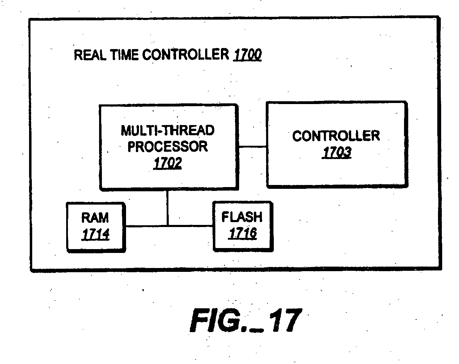

FIG. 17 illustrates a real-time controller 1700 that includes a multi-thread processor 1702 and a controller 1703. Real-time controller 1700 is operable to process real-time program code and control a controlled device (not shown). In one implementation, multi-thread processor 1702 performs substantially all the processing functions associated with real-time controller 1700. Real-time controller 1700 can be any type of wireless or wired device that processes real-time program code.

In one implementation, RAM memory 1714 and/or flash memory 1716 store real-time program code to be executed by real-time controller 1700. The real-time program code can be processed using one or more processor threads executed by multi-thread processor 1702.

A number of implementations have been described. Nevertheless, it will be understood that various modifications may be made. For example, though the applications described above include a single multi-thread processor, any of the applications can include two or more multi-thread processors. For example, hard disk drive system 800 can include two multi-thread processors (e.g., a first multi-thread processor and a second multi-thread processor). In one implementation, the second multi-thread processor executes a processor thread not executed by the first multi-thread processor. Also, the steps of the methods described above can be performed in a different order and still achieve desirable results. Accordingly, other implementations are within the scope of the following claims.

## Claims

1. An apparatus (100) comprising:
a multi-thread processor adapted to execute at least two threads (T₁-Tₙ) of program code, the multi-thread processor including:
an execution pipeline comprising:
an instruction fetch unit (104);
a decoder (106) responsive to the instruction fetch unit;
an issue unit (108) responsive to the decoder; and
an execution unit (112) responsive to the issue unit;
a thread control unit (118) including a plurality of thread allocation counters adapted to control the execution pipeline to execute program code of a first thread and a second thread by storing processor time allocations that have been defined for each of the first and second threads and automatically performing a context switch by determining from which of the first and second threads a next instruction will be fetched by the instruction fetch unit, wherein the thread allocation counters determine a weighting corresponding to processor time allocated to each thread; and
a register file (110) adapted to store data associated with each of the first and second threads in separate first and second banks associated with the first and second thread, respectively,
wherein the execution pipeline is adapted to contain instructions associated with both the first and second threads while the data associated with each of the first and second threads are maintained separately through the first and second banks, respectively.

2. The apparatus of claim 1, wherein the first thread is adapted to execute application related program code, and the second thread is adapted to execute system level program code.

3. The apparatus of claim 2, wherein the apparatus is a media player device, and the application related program code is audio or video media processing related program code.

4. The apparatus of claim 3, further comprising:
a storage medium (102, 110) to store at least one of audio or video data thereon; and
an output device to output the at least one of the audio or video data.

5. The apparatus of claim 2, wherein the apparatus is a wireless network device, and the application related program code is wireless networking related program code.

6. The apparatus of claim 5, wherein the wireless network device is one of a wireless router or a wireless access point.

7. The apparatus of claim 2, wherein the apparatus is a broadband modem, and the application related program code is broadband communication related program code.

8. The apparatus of claim 7, wherein the broadband communication related program code includes cable communication program code, DSL communication program code, or satellite communication program code.

9. The apparatus of claim 2, wherein the apparatus is a wired router, and the application related program code is networking related program code.

10. The apparatus of any of claims 5 and 9, wherein the networking related program code includes at least one of routing program code, network program code, access point program code, security program code, repeater program code, program code implementing a wireless communication protocol, or virtual private networking program code.

11. The apparatus of any of claims 3, 5, 7 and 9, wherein the system level program code includes at least one of servo related program code, disk drive data capture program code, video processing program code, audio processing program code, MAC program code, WLAN program code, network communication program code, error correction program code, video processing program code, audio processing program code, host protocol management program code, cache management program code, defect manager program code, encryption/decryption program code, compression/decompression program code, wired/wireless communication program code or security management program code.

12. The apparatus of any of claims 3, 5, 7 and 9, further comprising:
a second multi-thread processor adapted to execute at least two threads of program code, the second multi-thread processor including,
a second execution pipeline, and
a second thread control unit to control the second execution pipeline to execute program code as a third thread and program code as a fourth thread by storing processor time allocations that have been defined for each of the third and fourth threads and automatically performing a context switch by determining from which of the third and fourth threads a next instruction will be fetched.

13. The apparatus of claim 12, wherein the third thread is adapted to execute first real time program code and the fourth thread is adapted to execute second real time program code.

14. The apparatus of claim 2, wherein the apparatus is a real time controller, and the application related to program code is first real time program code and the system level program code is second real time program code.

15. The apparatus of claim 14, wherein the first real time code is video processing program code and the second real time code is audio program code.

16. The apparatus of claim 14, further comprising a storage controller and the first real-time program code being servo related program code.

17. The apparatus of claim 16, wherein the storage controller comprises a hard disk controller or an optical disk controller.

18. The apparatus of claim 17, wherein the host protocol management program code manages at least one of the following protocols ATA, USB, SATA, SAS, FC, CE-ATA, or SDIO.

19. The apparatus of any of claims 14, 16 and 17, further comprising:
a second multi-thread processor adapted to execute at least two threads of program code, the second multi-thread processor including,
a second execution pipeline, and
a second thread control unit to control the second execution pipeline to execute program code as a third thread and program code as a fourth thread by storing processor time allocations that have been defined for each of the third and fourth threads and automatically performing a context switch by determining from which of the third and fourth threads a next instruction will be fetched.

20. The apparatus of claim 19, wherein the third thread is adapted to execute third real time program code and the fourth thread is adapted to execute fourth real time program code.

21. The apparatus of claim 20, wherein the second multi-thread processor executes a given thread of program code not executed by the first multi-thread processor.

22. The apparatus of claim 17, wherein the thread control unit further controls the execution pipeline to execute additional program code as a third thread.

23. The apparatus of claim 17, wherein the system level program code comprises at least one of disk drive data capture program code, DVD data capture program code, error correction program code, video processing program code, audio processing program code, host protocol management program code, cache management program code, defect manager program code, or encryption and security management program code.

24. A system comprising:
the apparatus of claim 2 or 12; and
wherein the application related program code is communication related program code.

25. The system of claim 24, wherein the system is a cellular WLAN system, and the communication related program code is cellular communication related program code.

26. The system of claim 25, wherein the cellular communication related program code relates to one or more of the following protocols CDMA, G3, or GSM.

27. The system of claim 24, wherein the system is a VoIP system, and the communication related program code is voice processing related program code.

28. The system of claim 27, wherein the thread control unit further controls the execution pipeline to execute codec related program code as a third thread.

29. The communication system of claim 24, wherein the system is a wireless television system, and the communication program code is media related program code.

30. The system of claim 29, wherein the media related program code includes at least one of video processing program code, or audio processing program code.

31. The system of any of claims 25, 27 and 29, wherein the system level program code includes at least one of menu program code, display program code, MAC program code, WLAN program code, network communication program code, error correction program code, video processing program code, audio processing program code, host protocol management program code, cache management program code, defect manager program code, encryption/decryption program code, compression/decompression program code, wired/wireless communication program code or security management program code.

## Patentansprüche

1. Vorrichtung (100), welche umfasst:
einen multithread-Prozessor, welcher ausgelegt ist, wenigstens zwei Programmcode-Threads (T₁-Tₙ) auszuführen, wobei der multithread-Prozessor enthält:
eine Ausführungspipeline, welche umfasst:
eine Einheit, welche Befehle holt (104);
einen Decoder (106), welcher auf die Einheit, welche Befehle holt, reagiert;
eine Zuteilungseinheit (108), welche auf den Decoder reagiert; und
eine Ausführungseinheit (112), welche auf die Zuteilungseinheit reagiert;
eine Thread-Steuereinheit (118), welche eine Vielzahl von Thread-Zuordnungszählern enthält, welche eingerichtet sind, die Ausführungspipeline zum Ausführen von Programmcode eines ersten Threads und eines zweiten Threads durch Speichern von Prozessor-Zeitzuordnungen zu steuern, wobei die Prozessor-Zeitzuordnungen für jeden der ersten und zweiten Threads definiert worden sind, und automatisches Ausführen eines Kontextwechsels durch Bestimmen, von welchem der ersten und zweiten Threads ein nächster Befehl durch die Einheit, welche Befehle holt, geholt wird, wobei die Thread-Zuordnungszähler eine Gewichtung entsprechend einer Prozessor-Zeit, welche jedem Thread zugeteilt ist, bestimmen; und
eine Registerdatei (110), welche eingerichtet ist, Daten, welche mit jedem der ersten und zweiten Threads verbunden sind, in getrennten ersten und zweiten Bänken, welche mit dem jeweils ersten und zweiten Thead verbunden sind, zu speichern,
wobei die Ausführungspipeline eingerichtet ist, Befehle zu enthalten, welche sowohl mit dem ersten als auch mit dem zweiten Thread verbunden sind, während die Daten, welche mit jedem der ersten und zweiten Threads verbunden sind, mittels den ersten beziehungsweise zweiten Bänken getrennt beibehalten werden.

2. Vorrichtung nach Anspruch 1, wobei der erste Thread eingerichtet ist, anwendungsbezogenen Programmcode auszuführen, und wobei der zweite Thread eingerichtet ist, Programmcode auf Systemebene auszuführen.

3. Vorrichtung nach Anspruch 2, wobei die Vorrichtung ein Medienabspielgerät ist, und der anwendungsbezogene Programmcode ein Programmcode ist, welcher in Beziehung zum Verarbeiten von Audio- oder Videomedien steht.

4. Vorrichtung nach Anspruch 3, welche weiterhin umfasst:
ein Speichermedium (102, 110), um darauf Audio- und/oder Videodaten zu speichern; und
ein Ausgabegerät, um die Audio- und/oder Videodaten auszugeben.

5. Vorrichtung nach Anspruch 2, wobei die Vorrichtung ein drahtloses Netzwerkgerät ist, und der anwendungsbezogene Programmcode ein Programmcode ist, welcher in Beziehung zur drahtlosen Vernetzung steht.

6. Vorrichtung nach Anspruch 5, wobei das drahtlose Netzwerkgerät ein drahtloser Router oder ein drahtloser Zugangspunkt ist.

7. Vorrichtung nach Anspruch 2, wobei die Vorrichtung ein Breitband-Modem ist, und der anwendungsbezogene Programmcode ein Programmcode ist, welcher in Beziehung zur Breitbandkommunikation steht.

8. Vorrichtung nach Anspruch 7, wobei der Programmcode, welcher in Beziehung zur Breitbandkommunikation steht, ein Programmcode zur Kabelkommunikation, ein Programmcode zur DSL-Kommunikation oder ein Programmcode zur Satellitenkommunikation enthält.

9. Vorrichtung nach Anspruch 2, wobei die Vorrichtung ein drahtgebundener Router ist, und der anwendungsbezogene Programmcode ein Programmcode ist, welcher in Beziehung zur Vernetzung steht.

10. Vorrichtung nach irgendeinem der Ansprüche 5 und 9, wobei der Programmcode, welcher in Beziehung zur Vernetzung steht, wenigstens Programmcode zum Routing, Netzwerkprogrammcode, Zugangspunktprogrammcode, Sicherheitsprogrammcode, Repeater-Programmcode, Programmcode, welcher ein drahtloses Kommunikationsprotokoll umsetzt, oder Programmcode zur virtuellen privaten Vernetzung enthält.

11. Vorrichtung nach irgendeinem der Ansprüche 3, 5, 7 und 9, wobei der Programmcode auf Systemebene wenigstens Programmcode, welcher in Beziehung zum Regeln (servo related) steht, Programmcode zum Datenerfassen auf einem Plattenlaufwerk, Programmcode zur Videoverarbeitung, Programmcode zur Audioverarbeitung, MAC Progammcode, WLAN Programmcode, Programmcode zur Netzwerkkommunikation, Programmcode zur Fehlerkorrektur, Programmcode zur Videoverarbeitung, Programmcode zur Audioverarbeitung, Programmcode zur Verwaltung eines Hostprotokolls, Programmcode zur Zwischenspeicherverwaltung, Programmcode zur Verwaltung von Defekten, Programmcode zur Verschlüsselung/Entschlüsselung, Programmcode zur Komprimierung/Dekomprimierung, Programmcode zur drahtgebundenen/drahtlosen Kommunikation, oder Programmcode zur Verwaltung von Sicherheit enthält.

12. Vorrichtung nach irgendeinem der Ansprüche 3, 5, 7 und 9, welche weiterhin umfasst:
einen zweiten multithread-Prozessor, welcher eingerichtet ist, wenigstens zwei Programmcode-Threads auszuführen, wobei der zweite multithread-Prozessor enthält:
eine zweite Ausführungspipeline, und
eine zweite Thread-Steuereinheit, um die zweite Ausführungspipeline durch Speichern von Prozessor-Zeitzuordnungen so zu steuern, dass Programmcode als ein dritter Thread und Programmcode als ein vierter Thread ausgeführt werden, wobei die Prozessor-Zeitzuordnungen für jeden der dritten und vierten Threads definiert worden sind, und automatisches Ausführen eines Kontextwechsels durch Bestimmen, von welchem der dritten und vierten Threads ein nächster Befehl geholt wird.

13. Vorrichtung nach Anspruch 12, wobei der dritte Thread eingerichtet ist, einen ersten Echtzeit-Programmcode auszuführen, und der vierte Thread eingerichtet ist, einen zweiten Echtzeit-Programmcode auszuführen.

14. Vorrichtung nach Anspruch 2, wobei die Vorrichtung eine Echtzeit-Steuerung ist, und der anwendungsbezogene Programmcode ein erster Echtzeit-Programmcode ist, und der Programmcode auf Systemebene ein zweiter Echtzeit-Programmcode ist.

15. Vorrichtung nach Anspruch 14, wobei der erste Echtzeit-Programmcode ein Programmcode zur Videoverarbeitung ist, und der zweite Echtzeit-Programmcode ein Audio-Programmcode ist.

16. Vorrichtung nach Anspruch 14, welche weiterhin eine Speichersteuerung umfasst, und der erste Echtzeit-Programmcode ein Programmcode zum Regeln ist.

17. Vorrichtung nach Anspruch 16, wobei die Speichersteuerung einen Festplattencontroller oder einen Controller für einen optischen Plattenspeicher umfasst.

18. Vorrichtung nach Anspruch 17, wobei der Programmcode zur Verwaltung des Hostprotokolls wenigstens eines der folgenden Protokolle verwaltet: ATA, USB, SATA, SAS, FC, CE-ATA, oder SDIO.

19. Vorrichtung nach jedem der Ansprüche 14, 16, und 17, welche weiterhin umfasst:
einen zweiten multithread-Prozessor, welcher eingerichtet ist, wenigstens zwei Programmcode-Threads auszuführen, wobei der zweite multithread-Prozessor enthält:
eine zweite Ausführungspipeline, und
eine zweite Thread-Steuereinheit, um die zweite Ausführungspipeline durch Speichern von Prozessor-Zeitzuordnungen so zu steuern, dass Programmcode als ein dritter Thread und Programmcode als ein vierter Thread ausgeführt werden, wobei die Prozessor-Zeitzuordnungen für jeden der dritten und vierten Threads definiert worden sind, und automatisches Ausführen eines Kontextwechsels durch Bestimmen, von welchem der dritten und vierten Threads ein nächster Befehl geholt wird.

20. Vorrichtung nach Anspruch 19, wobei der dritte Thread eingerichtet ist, dritten Echtzeit-Programmcode auszuführen, und der vierte Thread eingerichtet ist, vierten Echtzeit-Programmcode auszuführen.

21. Vorrichtung nach Anspruch 20, wobei der zweite multithread-Prozessor einen gegebenen Programmcode-Thread ausführt, welcher nicht durch den ersten multithread-Prozessor ausgeführt wird.

22. Vorrichtung nach Anspruch 17, wobei die Thread-Steuereinheit weiterhin die Ausführungspipeline steuert, um zusätzlichen Programmcode als einen dritten Thread auszuführen.

23. Vorrichtung nach Anspruch 17, wobei der Programmcode auf Systemebene wenigstens Programmcode zum Datenerfassen auf einem Plattenlaufwerk, Programmcode zum Datenerfassen auf DVD, Programmcode zur Fehlerkorrektur, Programmcode zur Videoverarbeitung, Programmcode zur Audioverarbeitung, Programmcode zur Verwaltung eines Hostprotokolls, Programmcode zur Zwischenspeicherverwaltung, Programmcode zur Verwaltung von Defekten, oder Programmcode zur Verschlüsselung und zur Verwaltung von Sicherheit umfasst.

24. System, welches umfasst:
die Vorrichtung nach Anspruch 2 oder 12; und
wobei der anwendungsbezogene Programmcode ein Programmcode ist, welcher in Beziehung zur Kommunikation steht.

25. System nach Anspruch 24, wobei das System ein zelluläres WLAN-System ist, und der Programmcode zur Kommunikation ein Programmcode ist, welcher in Beziehung zur zellulären Kommunikation steht.

26. System nach Anspruch 25, wobei der Programmcode, welcher in Beziehung zur zellulären Kommunikation steht, in Beziehung zu einem oder mehreren der folgenden Protokolle steht: CDMA, G3 oder GSM.

27. System nach Anspruch 24, wobei das System ein VolP-System ist, und der Programmcode, welcher in Beziehung zur Kommunikation steht, ein Programmcode ist, welcher in Beziehung zu Sprachverarbeitung steht.

28. System nach Anspruch 27, wobei die Thread-Steuereinheit weiterhin die Ausführungspipeline steuert, um Programmcode, welcher in Beziehung mit einem Codec steht, als einen dritten Thread auszuführen.

29. System nach Anspruch 24, wobei das System ein drahtloses Fernsehsystem ist, und der Programmcode zur Kommunikation ein Programmcode ist, welcher in Beziehung zu Medien steht.

30. System nach Anspruch 29, wobei der Programmcode, welcher in Beziehung zu Medien steht, wenigstens einen Programmcode zur Videoverarbeitung oder einen Programmcode zur Audioverarbeitung enthält.

31. System nach irgendeinem der Ansprüche 25, 27, und 29, wobei der Programmcode auf Systemebene wenigstens einen von Menü-Programmcode, Anzeige-Programmcode, MAC-Programmcode, WLAN-Programmcode, Programmcode zur Netzwerkkommunikation, Programmcode zur Fehlerkorrektur, Programmcode zur Videoverarbeitung, Programmcode zur Audioverarbeitung, Programmcode zur Verwaltung eines Hostprotokolls, Programmcode zur Zwischenspeicherverwaltung, Programmcode zur Verwaltung von Defekten, Programmcode zur Verschlüsselung/Entschlüsselung, Programmcode zur Komprimierung/Dekomprimierung, Programmcode zur drahtgebundenen/drahtlosen Kommunikation, oder Programmcode zur Verwaltung von Sicherheit enthält.

## Revendications

1. Appareil (100) comprenant :
un processeur multithread adapté pour exécuter au moins deux threads (T₁-Tₙ) de code de programme, le processeur multithread incluant :
un pipeline d'exécution comprenant :
une unité de saisie d'instructions (104) ;
un décodeur (106) répondant à l'unité de saisie d'instructions ;
une unité d'émission (108) répondant au décodeur ; et
une unité d'exécution (112) répondant à l'unité d'émission ;
une unité de contrôle de thread (118) incluant une pluralité de compteurs d'attribution de thread adaptés pour contrôler le pipeline d'exécution pour exécuter un code de programme d'un premier thread et d'un deuxième thread en stockant des attributions de temps de processeur qui ont été définies pour chaque thread parmi les premier et deuxième threads et en mettant en oeuvre automatiquement une commutation de contexte en déterminant depuis quel thread parmi les premier et deuxième threads une prochaine instruction sera saisie par l'unité de saisie d'instructions, dans lequel les compteurs d'attribution de thread déterminent une pondération correspondant à du temps de processeur attribué à chaque thread ; et
un fichier d'enregistrement (110) adapté pour stocker des données associées à chacun des premier et deuxième threads dans des première et deuxième banques séparées associées respectivement aux premier et deuxième threads,
dans lequel le pipeline d'exécution est adapté pour contenir des instructions associées aux deux premier et deuxième threads alors que les données associées à chacun des premier et deuxième threads sont maintenues séparées via respectivement les première et deuxième banques.

2. Appareil selon la revendication 1, dans lequel le premier thread est adapté pour exécuter un code de programme relatif à une application, et le deuxième thread est adapté pour exécuter un code de programme au niveau système.

3. Appareil selon la revendication 2, dans lequel l'appareil est un dispositif lecteur de médias, et le code de programme relatif à une application est un code de programme relatif au traitement de médias audio ou vidéo.

4. Appareil selon la revendication 3, comprenant en outre :
un support de stockage (102, 110) pour y stocker des données d'un type au moins parmi des données audio et vidéo ; et
un dispositif de sortie pour sortir lesdites données d'un type au moins parmi des données audio et vidéo.

5. Appareil selon la revendication 2, dans lequel l'appareil est un dispositif de réseau sans fil, et le code de programme relatif à une application est un code de programme relatif à une mise en réseau sans fil.

6. Appareil selon la revendication 5, dans lequel le dispositif de réseau sans fil est un dispositif parmi un routeur sans fil et un point d'accès sans fil.

7. Appareil selon la revendication 2, dans lequel l'appareil est un modem haut débit, et le code de programme relatif à une application est un code de programme relatif à une communication haut débit.

8. Appareil selon la revendication 7, dans lequel le code de programme relatif à une communication haut débit inclut un code de programme de communication par câble, un code de programme de communication DSL, ou un code de programme de communication satellite.

9. Appareil selon la revendication 2, dans lequel l'appareil est un routeur câblé, et le code de programme relatif à une application est un code de programme relatif à une mise en réseau.

10. Appareil selon l'une quelconque des revendications 5 et 9, dans lequel le code de programme relatif à une mise en réseau comprend au moins un code parmi un code de programme de routage, un code de programme de réseau, un code de programme de point d'accès, un code de programme de sécurité, un code de programme de répétiteur, un code de programme implémentant un protocole de communication sans fil et un code de programme de mise en réseau privé virtuel.

11. Appareil selon l'une quelconque des revendications 3, 5, 7 et 9, dans lequel le code de programme au niveau système inclut au moins un code parmi un code de programme relatif à une servocommande, un code de programme de capture de données de pilote de disque, un code de programme de traitement vidéo, un code de programme de traitement audio, un code de programme MAC, un code de programme de réseau local sans fil, un code de programme de communication en réseau, un code de programme de correction d'erreur, un code de programme de traitement vidéo, un code de programme de traitement audio, un code de programme de gestion de protocole hôte, un code de programme de gestion de cache, un code de protocole de gestionnaire de défaut, un code de programme de chiffrement/déchiffrement, un code de programme de compression/décompression, un code de programme de communication câblée/sans fil et un code de programme de gestion de sécurité.

12. Appareil selon l'une quelconque des revendications 3, 5, 7 et 9, comprenant en outre :
un deuxième processeur multithread adapté pour exécuter au moins deux threads de code de programme, le deuxième processeur multithread incluant,
un deuxième pipeline d'exécution, et
une deuxième unité de contrôle de thread pour contrôler le deuxième pipeline d'exécution afin d'exécuter un code de programme comme troisième thread et un code de programme comme quatrième thread en stockant des attributions de temps de processeur qui ont été définies pour chacun des troisième et quatrième threads et en mettant en oeuvre automatiquement une commutation de contexte en déterminant depuis quel thread parmi les troisième et quatrième threads une prochaine instruction sera saisie.

13. Appareil selon la revendication 12, dans lequel le troisième thread est adapté pour exécuter un premier code de programme en temps réel et le quatrième thread est adapté pour exécuter un deuxième code de programme en temps réel.

14. Appareil selon la revendication 2, dans lequel l'appareil est un contrôleur en temps réel, et le code de programme relatif à une application est un premier code de programme en temps réel et le code de programme au niveau système est un deuxième code de programme en temps réel.

15. Appareil selon la revendication 14, dans lequel le premier code en temps réel est un code de programme de traitement vidéo et le deuxième code en temps réel est un code de programme audio.

16. Appareil selon la revendication 14, comprenant en outre un contrôler de stockage et le premier code de programme en temps réel est un code de programme relatif à une servocommande.

17. Appareil selon la revendication 16, dans lequel le contrôler de stockage comprend un contrôler de disque dur ou un contrôler de disque optique.

18. Appareil selon la revendication 17, dans lequel le code de programme de gestion de protocole hôte gère au moins un des protocoles suivants : ATA, USB, SATA, SAS, FC, CE-ATA et SDIO.

19. Appareil selon l'une quelconque des revendications 14, 16 et 17, comprenant en outre :
un deuxième processeur multithread adapté pour exécuter au moins deux threads de code de programme, le deuxième processeur multithread incluant,
un deuxième pipeline d'exécution, et
une deuxième unité de contrôle de thread pour contrôler le deuxième pipeline d'exécution pour exécuter du code de programme comme troisième thread et du code de programme comme quatrième thread en stockant des attributions de temps de processeur qui ont été définies pour chacun des troisième et quatrième threads et en mettant en oeuvre automatiquement une commutation de contexte en déterminant depuis quel thread parmi les troisième et quatrième threads une prochaine instruction sera saisie.

20. Appareil selon la revendication 19, dans lequel le troisième thread est adapté pour exécuter un troisième code de programme en temps réel et le quatrième thread est adapté pour exécuter un quatrième code de programme en temps réel.

21. Appareil selon la revendication 20, dans lequel le deuxième processeur multithread exécute un thread donné de code de programme qui n'est pas exécuté par le premier processeur multithread.

22. Appareil selon la revendication 17, dans lequel l'unité de contrôle de thread contrôle en outre le pipeline d'exécution pour exécuter un code de programme additionnel comme troisième thread.

23. Appareil selon la revendication 17, dans lequel le code de programme au niveau système comprend au moins un code parmi un code de programme de capture de données de pilote de disque, un code de programme de capture de données DVD, un code de programme de correction d'erreur, code de programme de traitement vidéo, un code de programme de traitement audio, un code de programme de gestion de protocole hôte, un code de programme de gestion de cache, un code de protocole de gestionnaire de défaut et un code de programme de gestion de chiffrement et de sécurité.

24. Système comprenant :
l'appareil selon la revendication 2 ou 12 ; et
dans lequel le code de programme relatif à une application est un code de programme relatif à une communication.

25. Système selon la revendication 24, dans lequel le système est un système de réseau local sans fil cellulaire, et le code de programme relatif à une application est un code de programme relatif à une communication cellulaire.

26. Système selon la revendication 25, dans lequel le code de programme relatif à une communication cellulaire a trait à un ou plusieurs des protocoles suivants CDMA, G3 ou GSM.

27. Système selon la revendication 24, dans lequel le système est un système de voix sur IP, et le code de programme relatif à une application est un code de programme relatif au traitement vocal.

28. Système selon la revendication 27, dans lequel l'unité de contrôle de thread contrôle en outre le pipeline d'exécution pour exécuter un code de programme relatif à un codec comme troisième thread.

29. Système de communication selon la revendication 24, dans lequel le système est un système de télévision sans fil, et le code de programme de communication est un code de programme relatif à un média.

30. Système selon la revendication 29, dans lequel le code de programme relatif à un média inclut au moins un code parmi un code de programme de traitement vidéo et un code de programme de traitement audio.

31. Système selon l'une quelconque des revendications 25, 27 et 29, dans lequel le code de programme au niveau système inclut au moins un code parmi un code de programme de menu, un code de programme d'affichage, un code de programme MAC, un code de programme de réseau local sans fil, un code de programme de communication en réseau, un code de programme de correction d'erreur, un code de programme de traitement vidéo, un code de programme de traitement audio, un code de programme de gestion de protocole hôte, un code de programme de gestion de cache, un code de protocole de gestionnaire de défaut, un code de programme de chiffrement/déchiffrement, un code de programme de compression/décompression, un code de programme de communication câblée/sans fil et un code de programme de gestion de sécurité.
